# EUROPEAN PATENT APPLICATION

(11) **EP 4 769 144 A1**
(43) Date of publication of application: **01.07.2026**
(21) Application number: 25224417.3
(22) Date of filing: 17.12.2025
(51) Int. Cl.: G06F 9/50, G06F 21/60, H04L 9/40, H04L 67/30, H04L 67/306, H04L 41/0806, H04L 67/00, G06F 21/10, H04W 8/18

(54) **CLOUD APPLICATION PROVISION SYSTEM, CLOUD APPLICATION PROVISION DEVICE, CLOUD SERVICE PROGRAM, ELECTRONIC DEVICE, CLOUD APPLICATION UTILIZATION PROGRAM, AND MANAGEMENT SYSTEM**

(30) Priority: 26.12.2024 JP 2024231094
(71) Applicant: KYOCERA Document Solutions Inc., Osaka-shi, Osaka 540-8585 (JP)
(72) Inventor: NAKATANI, Ryusuke, Osaka-shi, Osaka, 540-8585 (JP); MANABE, Hiroshi, Osaka-shi, Osaka, 540-8585 (JP); ISHIZU, Ryuichi, Osaka-shi, Osaka, 540-8585 (JP); TAKAGI, Ryota, Osaka-shi, Osaka, 540-8585 (JP)
(74) Representative: Herrero & Asociados, S.L.

(57) **Abstract**

A cloud application provision system (20) provides a cloud application (32) to be utilized by an electronic device (40). The cloud application provision system (20) manages a tenant to which the electronic device (40) belongs, and the electronic device (40) belonging to the tenant. The cloud application provision system (20) creates, upon receipt of specific information transmitted from the electronic device (40), the tenant in which the electronic device (40) that is a transmission source of the specific information is to be registered, and registers the electronic device (40) that is the transmission source of the specific information, in the tenant created.

## Description

### BACKGROUND

The present invention relates to a cloud application provision system, a cloud application provision device, a cloud service program, an electronic device, a cloud application utilization program, and a management system.

A cloud application provision system that provides a cloud application is known.

### SUMMARY

The invention proposes further improvement of the foregoing technique.

In an aspect, the invention provides a cloud application provision system that provides a cloud application to be utilized by an electronic device. The cloud application provision system manages a tenant to which the electronic device belongs, and the electronic device belonging to the tenant. The cloud application provision system creates, upon receipt of specific information transmitted from the electronic device, the tenant in which the electronic device that is a transmission source of the specific information is to be registered, and registers the electronic device that is the transmission source of the specific information, in the tenant created.

In another aspect, the invention provides a cloud application provision device that provides a cloud application to be utilized by an electronic device. The cloud application provision device manages a tenant to which the electronic device belongs, and the electronic device belonging to the tenant. The cloud application provision device creates, upon receipt of specific information transmitted from the electronic device, the tenant in which the electronic device that is a transmission source of the specific information is to be registered, and registers the electronic device that is the transmission source of the specific information, in the tenant created.

In still another aspect, the invention provides a cloud service program that provides a cloud application to be utilized by an electronic device, and causes a computer to execute a process for managing a tenant to which the electronic device belongs, and the electronic device belonging to the tenant. The cloud service program causes the computer to create, upon receipt of specific information transmitted from the electronic device, the tenant in which the electronic device that is a transmission source of the specific information is to be registered, and register the electronic device that is the transmission source of the specific information, in the tenant created.

In still another aspect, the invention provides an electronic device that utilizes a cloud application provided by a cloud application provision system that provides the cloud application. The electronic device transmits specific information to the cloud application provision system that creates, upon receipt of the specific information transmitted from the electronic device, a tenant in which the electronic device that is a transmission source of the specific information is to be registered, and registers the electronic device that is the transmission source of the specific information, in the tenant created.

In still another aspect, the invention provides a cloud application utilization program that causes a computer to execute a process for allowing an electronic device to utilize a cloud application provided by a cloud application provision system that provides the cloud application. The cloud application utilization program causes the computer provided in the cloud application provision system, to cause the electronic device to transmit specific information to the cloud application provision system, to create, upon receipt of the specific information transmitted from the electronic device, the tenant in which the electronic device that is a transmission source of the specific information is to be registered, and to register the electronic device that is the transmission source of the specific information, in the tenant created.

In still another aspect, the invention provides a management system including an electronic device, and the foregoing cloud application provision system.

### BRIEF DESCRIPTION OF THE DRAWINGS

Fig. 1 is a block diagram showing an example of a system according to an embodiment of the invention;
Fig. 2 is a block diagram showing an example of the cloud application provision system shown in Fig. 1, including a single computer;
Fig. 3 is a table showing an example of the tenant management information shown in Fig. 2;
Fig. 4 is a schematic diagram showing an example of a tier structure of tenants included in the tenant management information shown in Fig. 3;
Fig. 5 is a table showing an example of the tenant user management information shown in Fig. 2;
Fig. 6 is a table showing an example of the device management information shown in Fig. 2;
Fig. 7 is a block diagram showing an example of the image forming apparatus shown in Fig. 1, constituted as an MFP;
Fig. 8 is a table showing an example of the device information shown in Fig. 7;
Fig. 9 is a table showing an example of the device user management information shown in Fig. 7;
Fig. 10 is a table showing an example of the cloud application setting information shown in Fig. 7;
Fig. 11 is a block diagram showing an example of the user terminal shown in Fig. 1;
Fig. 12 is a flowchart showing an operation of the image forming apparatus shown in Fig. 7, performed when starting up a cloud application utilization program;
Fig. 13 is a flowchart showing a process subsequent to Fig. 12;
Fig. 14 is a flowchart showing a process subsequent to Fig. 13;
Fig. 15 is a flowchart showing a process subsequent to Fig. 12 and Fig. 13;
Fig. 16 is a flowchart showing a process subsequent to Fig. 12;
Fig. 17 is a flowchart showing a process subsequent to Fig. 12;
Fig. 18 is a flowchart showing a process subsequent to Fig. 17;
Fig. 19 is a flowchart showing an operation of the cloud application provision system shown in Fig. 2, performed upon receipt of a device registration confirmation request;
Fig. 20 is a schematic drawing showing an example of a device registration method selection screen, displayed in the operation of Fig. 12 to Fig. 18;
Fig. 21 is a schematic drawing showing an example of a device manager log-in screen, displayed in the operation of Fig. 12 to Fig. 18;
Fig. 22 is a schematic drawing showing an example of a tenant creation setting screen, displayed in the operation of Fig. 12 to Fig. 18;
Fig. 23 is a schematic drawing showing an example of a proxy setting screen, displayed in the operation of Fig. 12 to Fig. 18;
Fig. 24 is a flowchart showing an operation of the new registration service shown in Fig. 1, performed upon receipt of new registration information;
Fig. 25 is a flowchart showing a part of the operation of the new registration service shown in Fig. 1, performed to identify a distributor for which a tenant customer tenant is created;
Fig. 26 is a flowchart showing the tenant creation process included in Fig. 24;
Fig. 27 is a flowchart showing an example of the new device registration process included in Fig. 24;
Fig. 28 is a flowchart showing another example of the new device registration process included in Fig. 24;
Fig. 29 is a schematic drawing showing an example of a sign-up mail transmission notice screen, displayed in the operation of Fig. 12 to Fig. 18;
Fig. 30 is a sequence chart showing an operation of the system shown in Fig. 1, performed to register a tenant manager via a sign-up mail;
Fig. 31 is a schematic drawing showing an example of the main text of the sign-up mail, displayed in the operation of Fig. 30;
Fig. 32 is a schematic drawing showing an example of the sign-up page, displayed in the operation of Fig. 30;
Fig. 33 is a schematic drawing showing an example of a notified tenant device registration screen, displayed in the operation of Fig. 12 to Fig. 18;
Fig. 34 is a schematic drawing showing an example of a tenant log-in screen, displayed in the operation of Fig. 12 to Fig. 18;
Fig. 35 is a flowchart showing an example of the operation of the device management service shown in Fig. 1, performed upon receipt of a device registration request;
Fig. 36 is a flowchart showing another example of the operation of the device management service shown in Fig. 1, performed upon receipt of a device registration request;
Fig. 37 is a schematic drawing showing an example of a designated tenant device registration screen, displayed in the operation of Fig. 12 to Fig. 18;
Fig. 38 is a schematic drawing showing an example of a device registration screen, displayed when a PIN is inputted, in the operation of Fig. 12 to Fig. 18;
Fig. 39 is a schematic drawing showing an example of the device registration screen, displayed when the PIN is not inputted, in the operation of Fig. 12 to Fig. 18;
Fig. 40 is a schematic drawing showing an example of a tenant manager registration request screen, displayed in the operation of Fig. 12 to Fig. 18;
Fig. 41 is a flowchart showing an example of the operation of the cloud service shown in Fig. 1, performed upon receipt of a sign-up mail retransmission request;
Fig. 42 is a flowchart showing an example of the operation of the new registration service shown in Fig. 1, performed upon receipt of representative address change information;
Fig. 43 is a schematic drawing showing an example of a cloud application log-in screen, displayed in the operation of Fig. 12 to Fig. 18;
Fig. 44 is a schematic drawing showing an example of a PIN input screen, displayed in the operation of Fig. 12 to Fig. 18; and
Fig. 45 is a flowchart showing an example of the operation of the cloud service shown in Fig. 1, performed upon receipt of a cloud application log-in request.

### DETAILED DESCRIPTION

First, a configuration of a system according to an embodiment of the invention will be described.

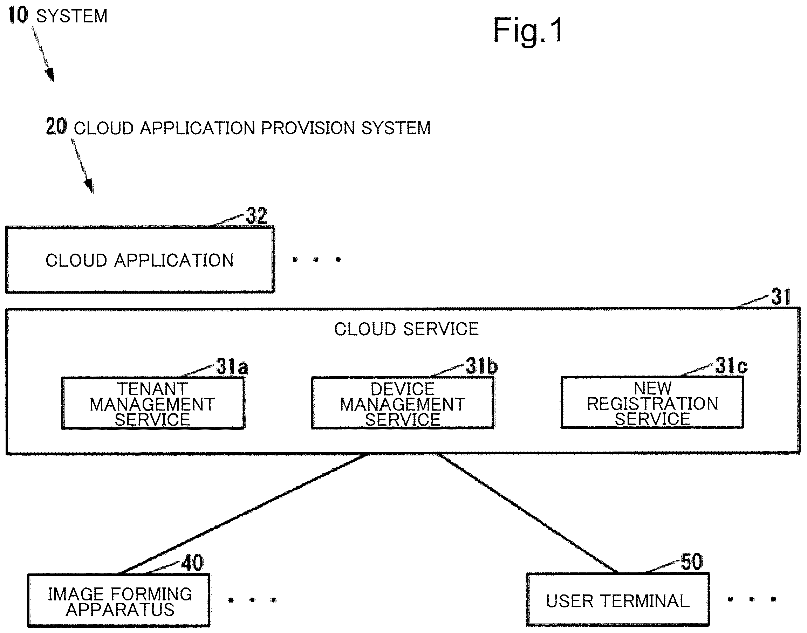

Fig. 1 is a block diagram showing a configuration of a management system 10 according to the embodiment.

As shown in Fig. 1, the management system 10 includes a cloud application provision system 20 that provides a cloud application. The cloud application provision system 20 may be constituted of a single computer such as a personal computer (PC), or a plurality of computers. The cloud application provision system 20 is constituted on the cloud.

The management system 10 includes an image forming apparatus 40, acting as the electronic device that utilizes the cloud application provided by the cloud application provision system 20. The management system 10 may additionally include one or more image forming apparatuses configured similarly to the image processing apparatus 40. The image forming apparatus may be constituted as a single-function printer, a single-function scanner, or a multifunction peripheral (MFP).

The management system 10 includes a user terminal 50 to be utilized by a user. The management system 10 may additionally include one or more user terminals configured similarly to the user terminal 50. The user terminal may be constituted of, for example, a personal computer (PC), or a tablet terminal.

The cloud application provision system 20 provides a cloud service 31 that provides cloud applications. The cloud service 31 includes a tenant management service 31a that manages tenants, a device management service 31b that manages image forming apparatuses, and a new registration service 31c that creates the tenant and newly registers the image forming apparatus.

The cloud application provision system 20 provides the cloud applications 32 provided on the cloud service 31. The cloud application provision system 20 may provide a cloud application on the cloud service 31, in addition to the cloud applications 32. Examples of the cloud application include an application that saves image data read from a document by the image forming apparatus on the cloud, and an application that executes various processings, such as optical character recognition (OCR), with respect to the image data read from the document by the image forming apparatus.

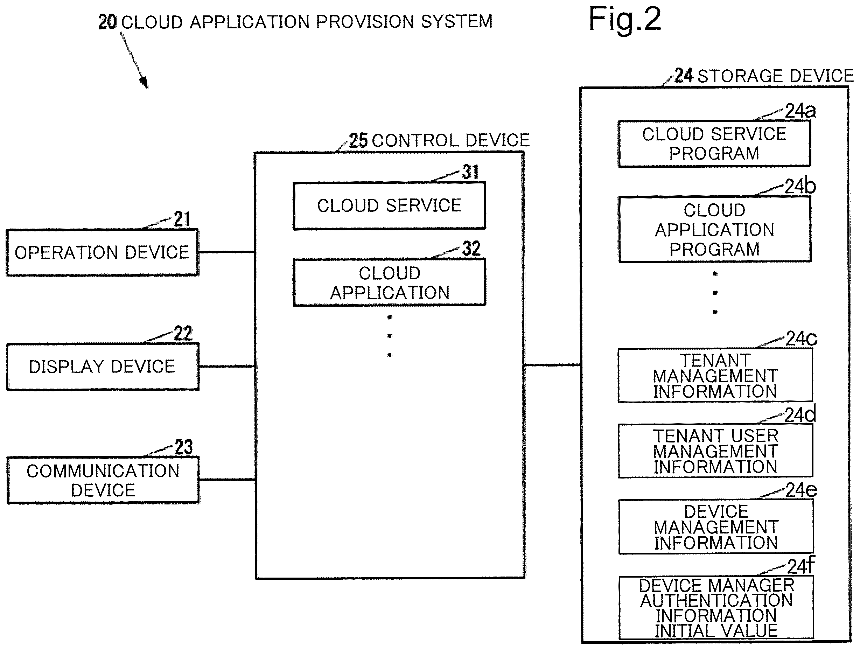

Fig. 2 is a block diagram showing an example of the cloud application provision system 20, including a single computer.

As shown in Fig. 2, the cloud application provision system 20 includes an operation device 21 including, for example, a keyboard and a mouse for inputting various operations, a display device 22, for example including a liquid crystal display (LCD) for displaying various types of information, a communication device 23 that performs communication with an external device, via a network such as a local area network (LAN) or the internet, or directly through wired or wireless communication, a storage device 24 including a non-volatile memory unit such as a semiconductor memory or a hard disk drive (HDD), for storing various types of information, and a control device 25 that controls the overall operation of the cloud application provision system 20.

The storage device 24 can store therein a cloud service program 24a for realizing the cloud service 31. The cloud service program 24a may be, for example, installed in the cloud application provision system 20 during the manufacturing process thereof, additionally installed in the cloud application provision system 20 from an external storage medium such as a universal serial bus (USB) memory, or additionally installed in the cloud application provision system 20 from the network.

The storage device 24 can store therein a cloud application program for realizing the cloud application, with respect to each of the cloud applications. For example, the storage device 24 can store therein a cloud application program 24b for realizing the cloud application 32. The cloud application program may be, for example, installed in the cloud application provision system 20 during the manufacturing process thereof, additionally installed in the cloud application provision system 20 from an external storage medium such as a universal serial bus (USB) memory, or additionally installed in the cloud application provision system 20 from the network.

The storage device 24 can store therein tenant management information 24c for managing the tenant of the cloud service 31.

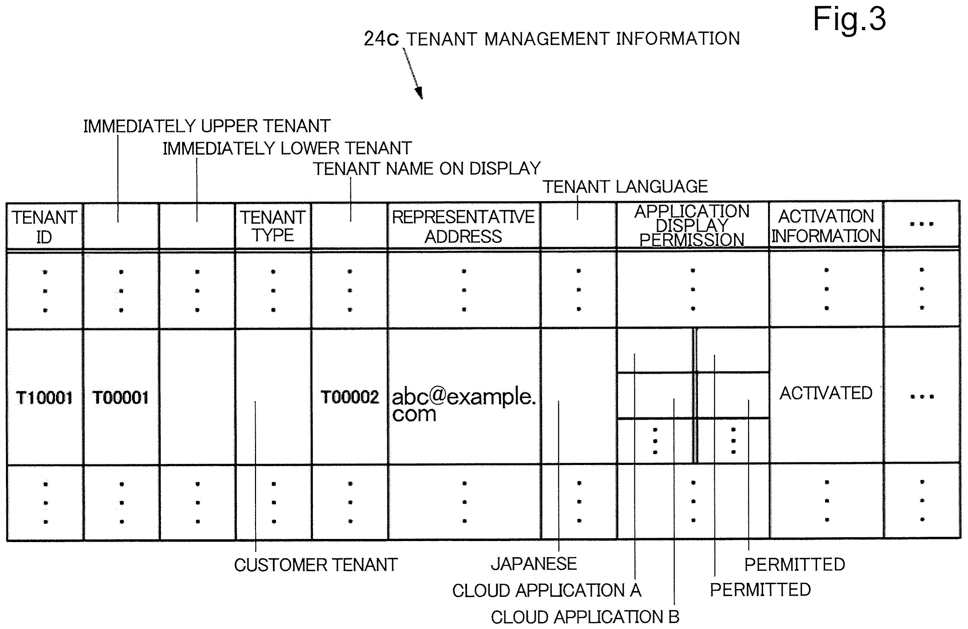

Fig. 3 is a table showing an example of the tenant management information 24c.

As shown in Fig. 3, the tenant management information 24c includes, "tenant ID" serving as the identification information of the subject tenant, a tenant on the immediately upper side of the subject tenant (hereinafter, "immediately upper tenant"), a tenant on the immediately lower side of the subject tenant (hereinafter, "immediately lower tenant"), the type of the subject tenant (hereinafter, "tenant type"), a displayed name of the subject tenant, used when displayed on a website provided by the cloud service 31 (hereinafter, "tenant name on display"), an e-mail address of the representative of the subject tenant (hereinafter, "representative address"), a language used in the website of the subject tenant, among the websites provided by the cloud service 31 (hereinafter, "tenant language"), whether the subject tenant may be displayed on the website, with respect to each of the cloud applications provided by the cloud application provision system 20 (hereinafter, "application display permission"), and "activation information" indicating whether the subject tenant is "activated" or "unactivated", with respect to each of the tenants. The value of the "immediately upper tenant" in the tenant management information 24c is indicated by the tenant ID of the immediately upper tenant. The value of the "immediately lower tenant" in the tenant management information 24c is indicated by the tenant ID of the immediately lower tenant. The value of the "tenant type" in the tenant management information 24c includes "distributor tenant" indicating that the tenant is a distributor of the image forming apparatus, and "customer tenant" indicating that the tenant is a customer of the distributor. In Fig. 3, the tenant management information 24c only shows a part of the information.

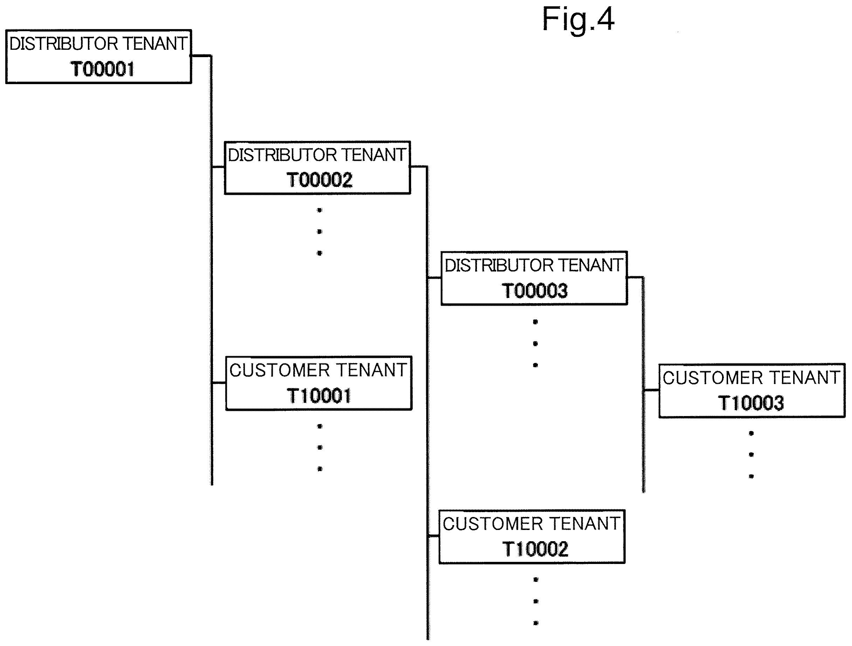

Fig. 4 is a schematic diagram showing an example of a tier structure of the tenants included in the tenant management information 24c.

As shown in Fig. 4, the tenants included in the tenant management information 24c constitute a tier structure. Here, the distributor tenant can be located immediately under another distributor tenant. In contrast, the customer tenant can only be located immediately under the distributor tenant.

As shown in Fig. 2, the storage device 24 can store therein tenant user management information 24d, for managing a user of the tenant (hereinafter, "tenant user").

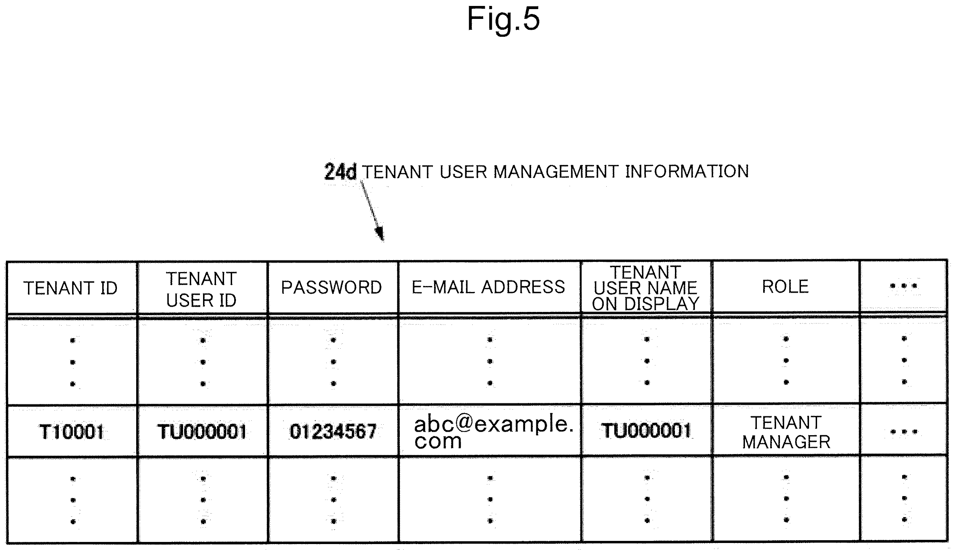

Fig. 5 is a table showing an example of the tenant user management information 24d.

As shown in Fig. 5, the tenant user management information 24d includes "tenant ID" of the tenant to which the tenant user belongs, "tenant user ID" serving as the identification information of the tenant user, "password" of the tenant user, "e-mail address" of the tenant user, the name of the tenant user displayed on the website provided by the cloud service 31 (hereinafter, "tenant user name on display"), and a "role" of the tenant user, with respect to each of the tenant users. The value of "role" in the tenant user management information 24d includes, for example, the manager of the tenant (hereinafter, "tenant manager"), and a "general user". In Fig. 5, the tenant user management information 24d only shows a part of the information.

As shown in Fig. 2, the storage device 24 can store therein device management information 24e, for managing the image forming apparatus belonging to the tenant.

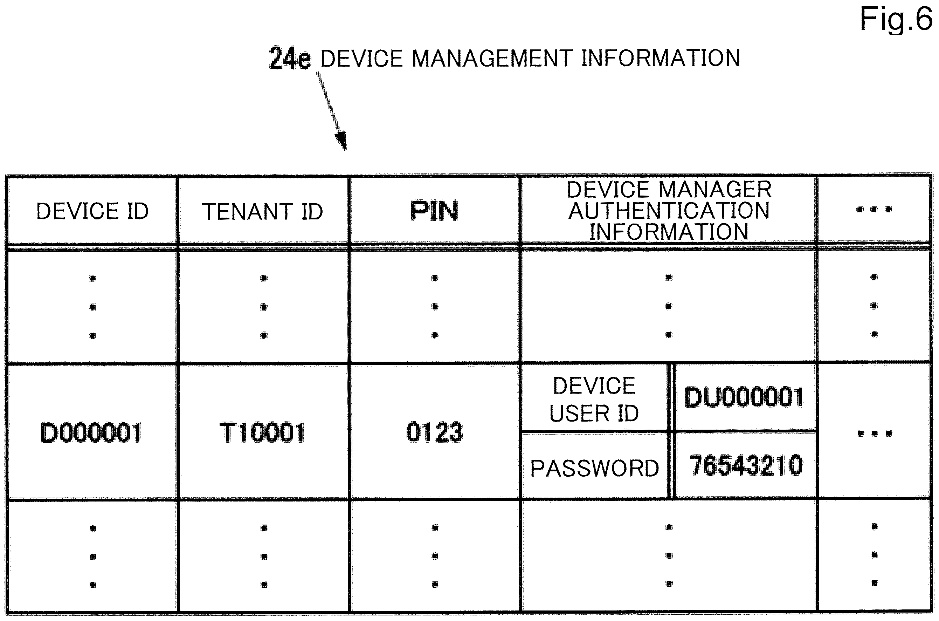

Fig. 6 is a table showing an example of the device management information 24e.

As shown in Fig. 6, the device management information 24e includes "device ID" serving as the identification information of the image forming apparatus, "tenant ID" of the tenant to which the image forming apparatus belongs, "personal identification number (PIN)" of the manager of the image forming apparatus (hereinafter, "device manager"), and "device manager authentication information", which is the authentication information of the device manager, among the device users, including the device user ID serving as the identification information of the device user, and the password of the device user, to be used when the user of the image forming apparatus (hereinafter, "device user") logs in to the mage forming apparatus, with respect to each of the image forming apparatuses. The device ID may be, for example, the serial number of the image forming apparatus. In Fig. 6, the device management information 24e only shows a part of the information .

As shown in Fig. 2, the storage device 24 can store therein the initial value of the device manager authentication information (hereinafter, "device manager authentication information initial value") 24f.

The control device 25 includes, for example, a central processing unit (CPU), a read-only memory (ROM) containing programs and various types of data, and a random-access memory (RAM) serving as the memory utilized as the operating region for the CPU of the control device 25. The CPU of the control device 25 executes the program stored in the storage device 24 or the ROM of the control device 25.

The control device 25 acts as a cloud service device that provides the cloud service 31, by executing the cloud service program 24a. The control device 25 provides the function realized by operating according to the cloud application program 24b, stored in the storage device 24, for example to the image forming apparatus 40, as the cloud application 32 through the cloud service device.

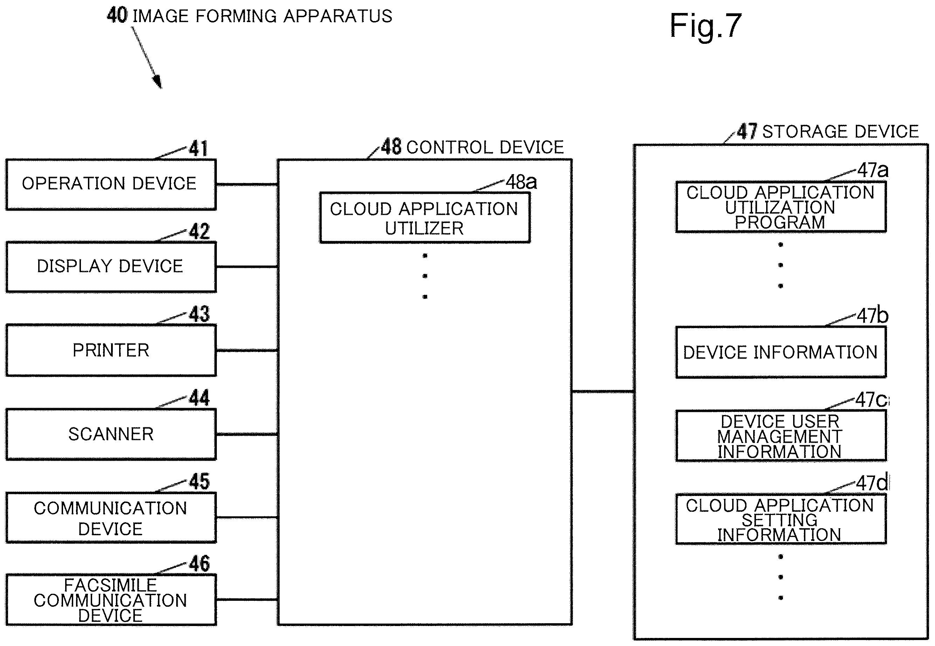

Fig. 7 is a block diagram showing an example of the image forming apparatus 40, constituted as an MFP.

As shown in Fig. 7, the image forming apparatus 40 is a computer including an operation device 41 including, for example, a keyboard and a mouse for inputting various operations, a display device 42, for example including an LCD for displaying various types of information, a printer 43 that prints an image on a recording medium such as a paper sheet, a scanner 44 that reads an image from a document, a communication device 45 that performs communication with an external device, via a network such as a LAN or the internet, or directly through wired or wireless communication, a facsimile communication device 46 that performs facsimile communication with a non-illustrated external facsimile machine, via a communication line such as a public telephone network, a storage device 47 including a non-volatile memory unit such as a semiconductor memory or an HDD, for storing various types of information, and a control device 48 that controls the overall operation of the image forming apparatus 40.

The storage device 47 can store therein a cloud application utilization program, for utilizing the cloud application provided by the cloud application provision system 20 (see Fig. 1), with respect to each of the cloud applications. For example, the storage device 47 can store therein a cloud application utilization program 47a for utilizing the cloud application 32 (see Fig. 1). The cloud application utilization program may be, for example, installed in the image forming apparatus 40 during the manufacturing process thereof, additionally installed in the image forming apparatus 40 from an external storage medium such as a universal serial bus (USB) memory, or additionally installed in the image forming apparatus 40 from the network.

The storage device 47 can store therein device information 47b, indicating various types of information related to the image forming apparatus 40 .

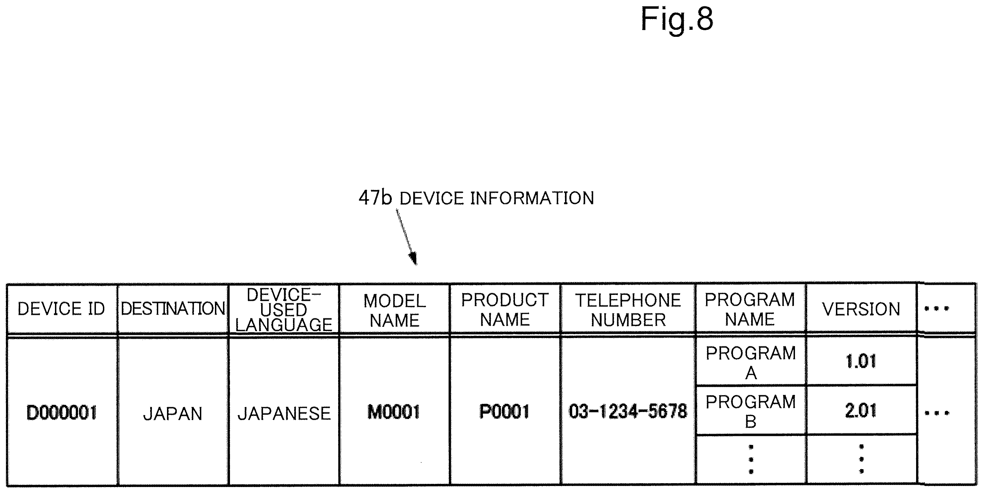

Fig. 8 is a table showing an example of the device information 47b.

As shown in Fig. 8, the device information 47b includes "device ID" of the image forming apparatus 40, "destination" of the image forming apparatus 40, a language used when displaying the screen in the image forming apparatus 40 (hereinafter, "device-used language"), "model name" of the image forming apparatus 40, "product name" of the image forming apparatus 40, "telephone number" of the service person of the image forming apparatus 40, the name of each of the cloud application utilization programs installed in the image forming apparatus 40 (hereinafter, "program name"), and "version". The destination is, for example, designated by the manufacturer of the image forming apparatus 40. The device-used language can be changed, for example, by the device manager of the image forming apparatus 40, through the operation device 41. The telephone number of the service person can be, for example, inputted by the service person. One product name is associated with one or a plurality of model names. In Fig. 8, the device information 47b only shows a part of the information.

As shown in Fig. 7, the storage device 47 can store therein device user management information 47c, for managing the device user of the image forming apparatus 40.

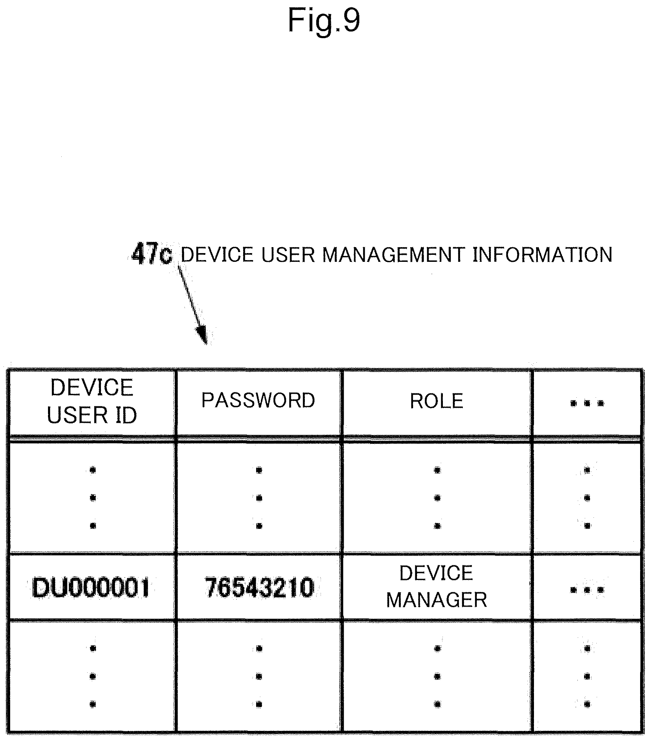

Fig. 9 is a table showing an example of the device user management information 47c.

As shown in Fig. 9, the device user management information 47c includes "device user ID" of the device user, "password" of the device user, and a "role" of the device user, with respect to each of the device users. The value of "role" in the device user management information 47c includes, for example, the device manager and the general user. In Fig. 9, the device user management information 47c only shows a part of the information.

As shown in Fig. 7, the storage device 47 can store therein cloud application setting information indicating various settings of the cloud application utilization program, with respect to each of the cloud application utilization programs. For example, the storage device 47 can store therein cloud application setting information 47d, indicating various settings of the cloud application utilization program 47a.

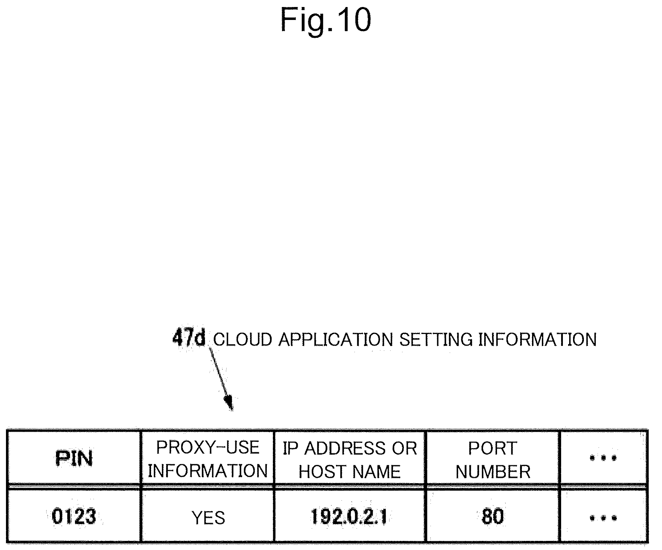

Fig. 10 is a table showing an example of the cloud application setting information 47d.

As shown in Fig. 10, the cloud application setting information 47d includes "PIN" of the device manager, "proxy-use information" indicating whether a proxy server is used for communication with outside, "IP address or host name" of the proxy server, and the "port number" of the proxy server. In Fig. 10, the cloud application setting information 47d only shows a part of the information.

The control device 48 shown in Fig. 7 includes, for example, a CPU, a ROM containing programs and various types of data, and a RAM serving as the memory utilized as the operation region for the CPU of the control device 48. The CPU of the control device 48 executes the program stored in the storage device 47 or the ROM of the control device 48.

The control device 48 acts as a cloud application utilizer that utilizes the cloud application, when the CPU executes the cloud application utilization program as a computer. For example, the control device 48 realizes a cloud application utilizer 48a that utilizes the cloud application 32, by executing the cloud application utilization program 47a.

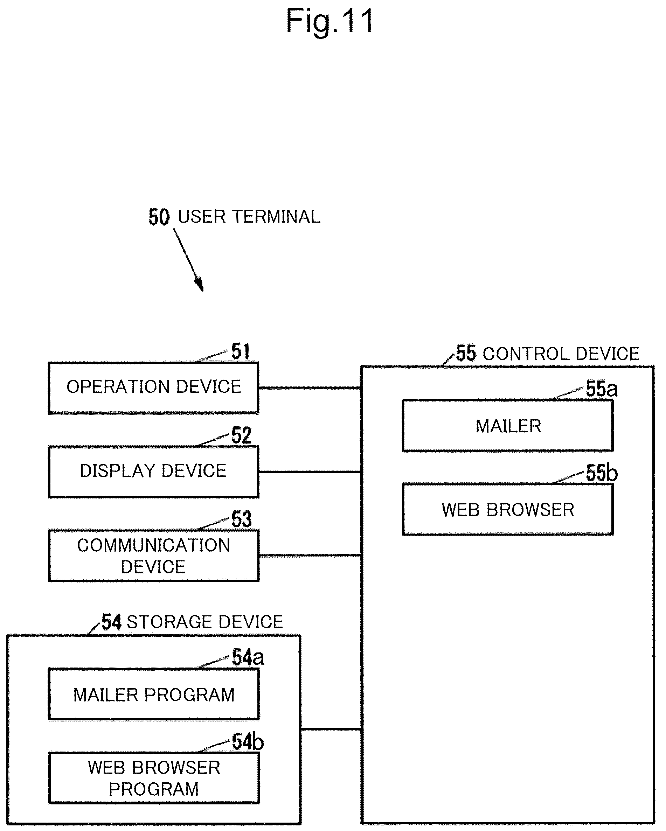

Fig. 11 is a block diagram showing an example of the user terminal 50.

As shown in Fig. 11, the user terminal 50 includes an operation device 51 including, for example, a keyboard and a mouse for inputting various operations, a display device 52, for example including an LCD for displaying various types of information, a communication device 53 that performs communication with an external device, via a network such as a LAN or the internet, or directly through wired or wireless communication, a storage device 54 including a non-volatile memory unit such as a semiconductor memory or an HDD, for storing various types of information, and a control device 55 that controls the overall operation of the user terminal 50.

The storage device 54 can store therein a program for the mailer (hereinafter, "mailer program") 54a. The mailer program 54a may be, for example, installed in the user terminal 50 during the manufacturing process thereof, additionally installed in the user terminal 50 from an external storage medium such as a universal serial bus (USB) memory, or additionally installed in the user terminal 50 from the network.

The storage device 54 can store therein a program for the web browser (hereinafter, "web browser program") 54b. The web browser program 54b may be, for example, installed in the user terminal 50 during the manufacturing process thereof, additionally installed in the user terminal 50 from an external storage medium such as a universal serial bus (USB) memory, or additionally installed in the user terminal 50 from the network.

The control device 55 includes, for example, a CPU, a ROM containing programs and various types of data, and a RAM serving as the memory utilized as the operation region for the CPU of the control device 55. The CPU of the control device 55 executes the program stored in the storage device 54 or the ROM of the control device 55.

The control device 55 acts as a mailer 55a, when the CPU executes the mailer program 54a as a computer.

The control device 55 acts as a web browser 55b, when the CPU executes the web browser program 54b as a computer.

Hereunder, an operation of the management system 10 will be described.

When starting up the cloud application utilization program 47a, the image forming apparatus 40 operates as follows.

The user of the image forming apparatus 40 can instruct, through the operation device 41, the image forming apparatus 40 to start up the cloud application utilization program 47a. Upon receipt of the instruction to start up the cloud application utilization program 47a, the control device 48 of the image forming apparatus 40 starts up the cloud application utilization program 47a.

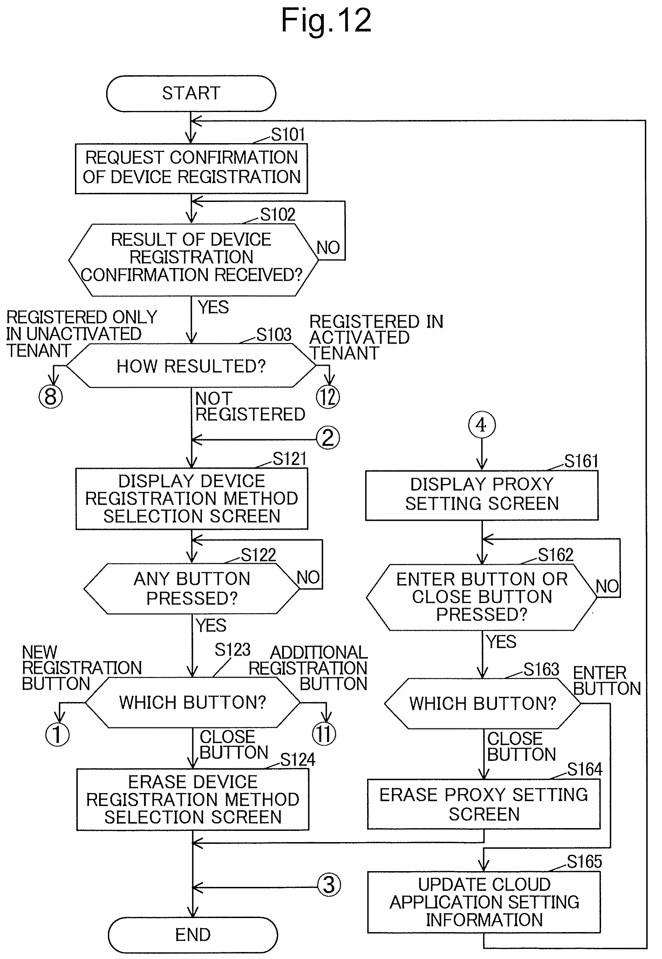

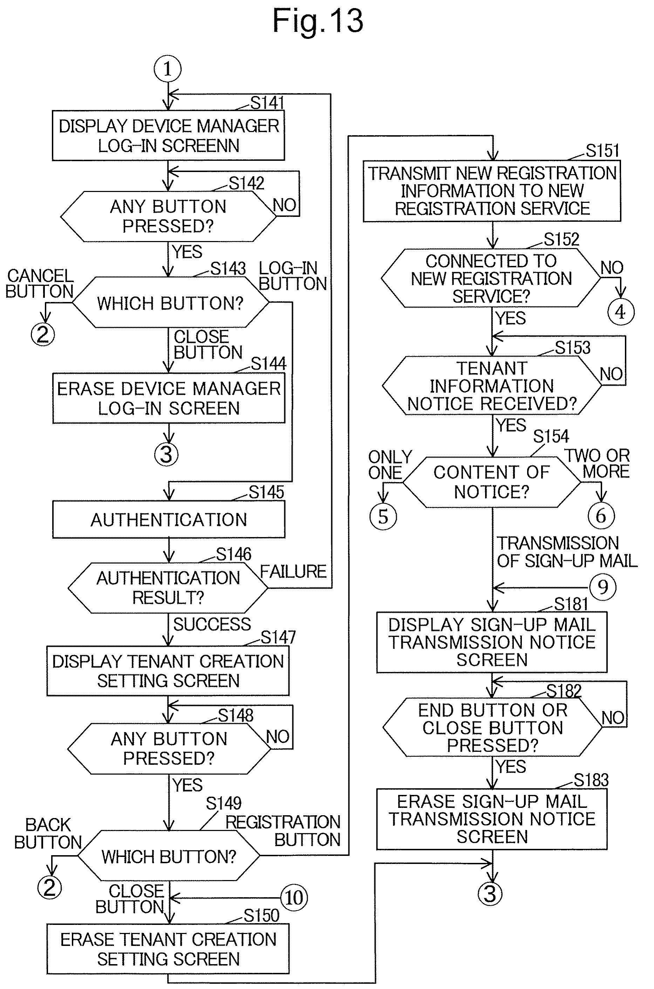

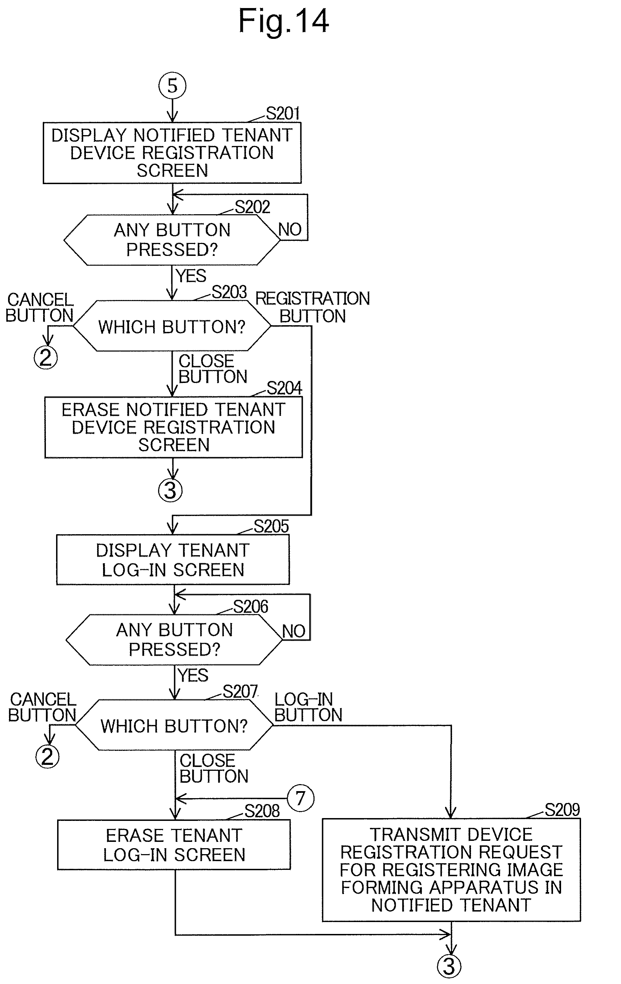

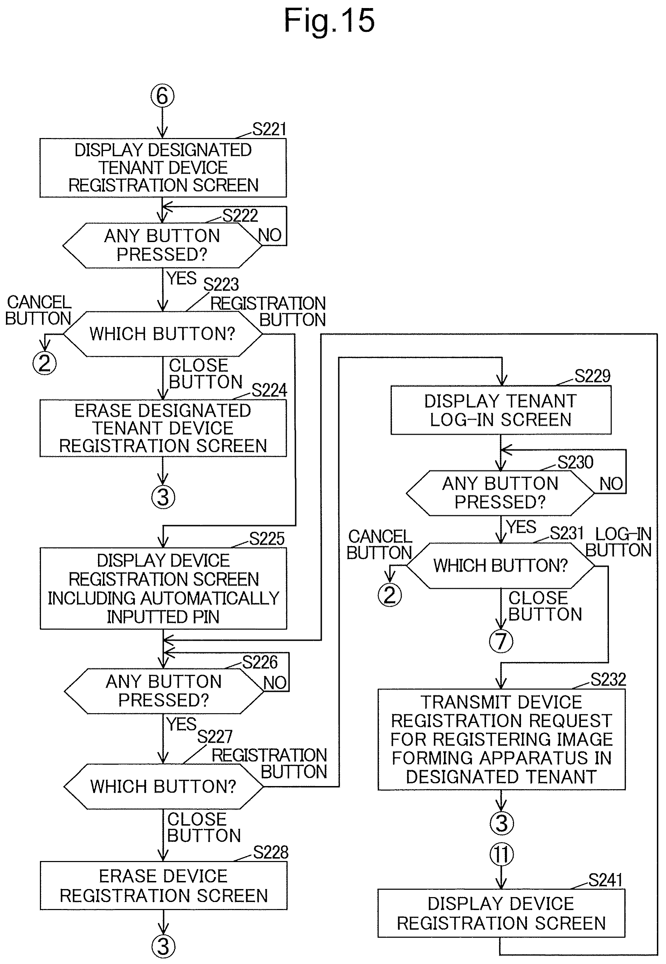

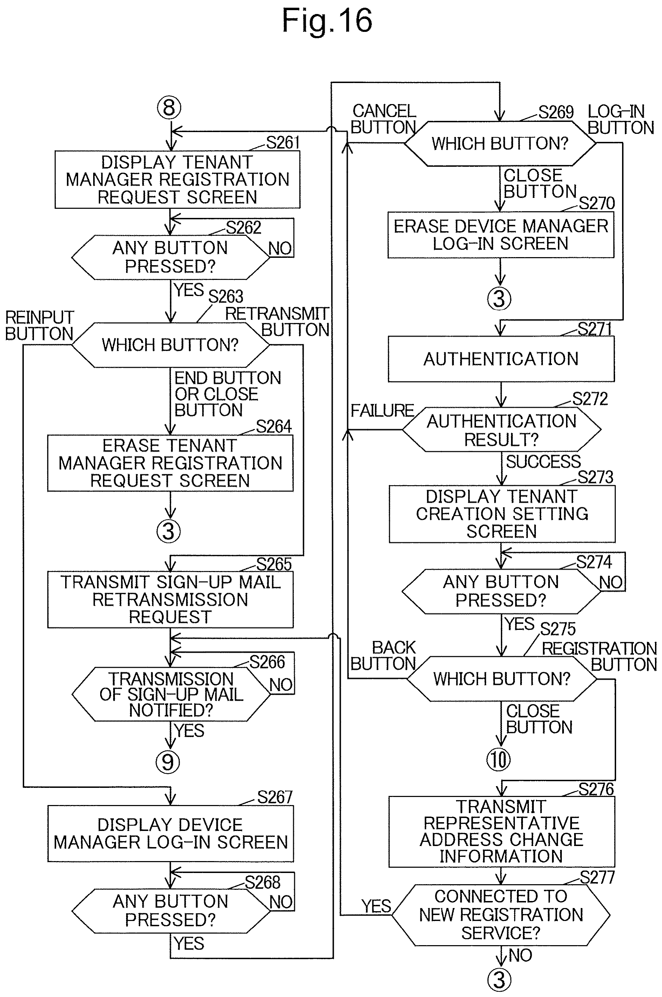

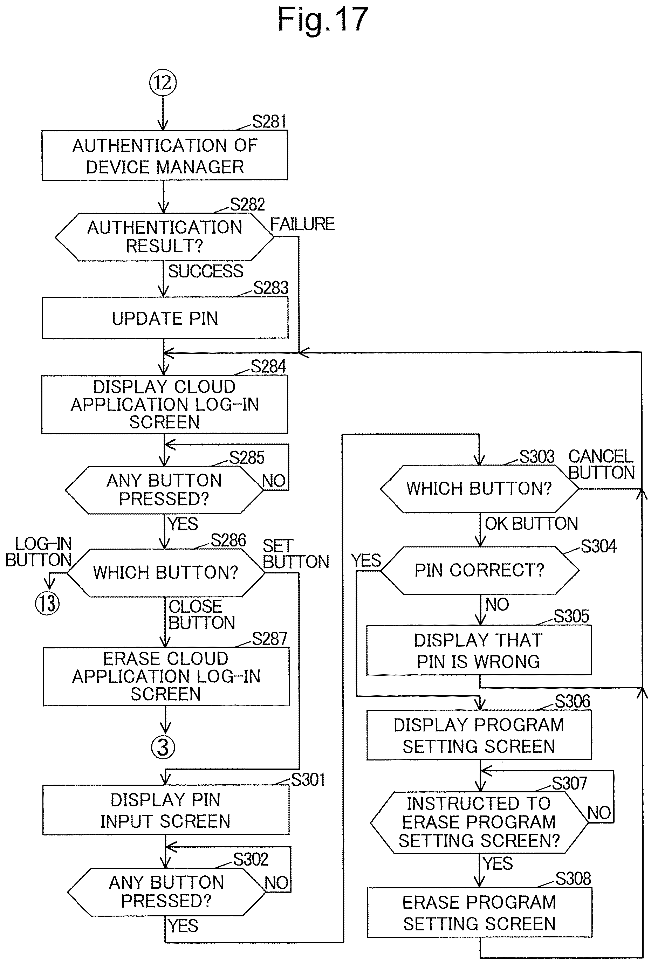

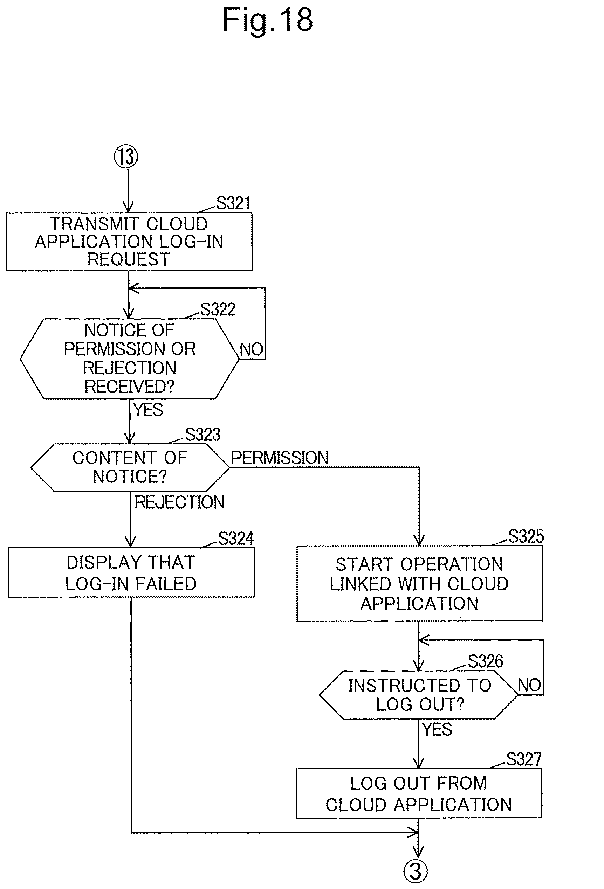

Fig. 12 is a flowchart showing an operation of the image forming apparatus 40, performed when starting up the cloud application utilization program 47a. Fig. 13 is a flowchart showing a process subsequent to Fig. 12. Fig. 14 is a flowchart showing a process subsequent to Fig. 13. Fig. 15 is a flowchart showing a process subsequent to Fig. 12 and Fig. 13. Fig. 16 is a flowchart showing a process subsequent to Fig. 12. Fig. 17 is a flowchart showing a process subsequent to Fig. 12. Fig. 18 is a flowchart showing a process subsequent to Fig. 17.

When the control device 48 of the image forming apparatus 40 executes the cloud application utilization program 47a, the cloud application utilizer 48a transmits a request to confirm a registration status of the image forming apparatus 40 in the cloud service 31 of the cloud application provision system 20 (hereinafter, "device registration confirmation request"), to the cloud service 31, as shown in Fig. 12 to Fig. 18 (S101). The cloud application utilizer 48a of the image forming apparatus 40 includes the device ID, serving as the identification information of the image forming apparatus 40, in the device registration confirmation request.

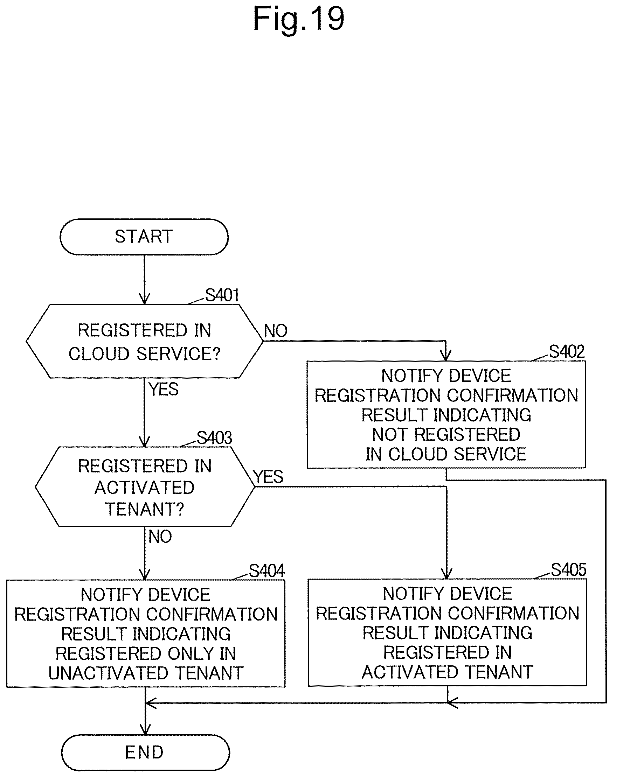

Fig. 19 is a flowchart showing an operation of the cloud application provision system 20, performed upon receipt of the device registration confirmation request.

Upon receipt of the device registration confirmation request from the image forming apparatus 40, the cloud service 31 of the cloud application provision system 20 executes an operation specified in Fig. 19.

As shown in Fig. 19, the cloud service 31 decides whether the image forming apparatus 40 is registered in the cloud service 31, on the basis of the device ID included in the device registration confirmation request, and the device management information 24e (S401). When the device ID included in the device registration confirmation request is included in the device management information 24e, the cloud service 31 decides that the image forming apparatus 40 is registered in the cloud service 31. In contrast, when the device ID included in the device registration confirmation request is not included in the device management information 24e, the cloud service 31 decides that the image forming apparatus 40 is not registered in the cloud service 31.

Upon deciding at S401 that the image forming apparatus 40 is not registered in the cloud service 31, the cloud service 31 notifies the result of the confirmation of the registration status of the image forming apparatus 40 (hereinafter, "device registration confirmation result") indicating that the image forming apparatus 40 is not registered in the cloud service 31, to the image forming apparatus 40 (S402).

Upon deciding at S401 that the image forming apparatus 40 is registered in the cloud service 31, the cloud service 31 decides whether the image forming apparatus 40 is registered in the activated tenant, on the basis of the device ID included in the device registration confirmation request, the tenant management information 24c, and the device management information 24e (S403). When the value of the "activation information", associated in the tenant management information 24c with the tenant ID, associated with the device ID included in the device registration confirmation request in the device management information 24e, is "activated", the cloud service 31 decides that the image forming apparatus 40 is registered in the activated tenant. In contrast, when the value of the "activation information", associated in the tenant management information 24c with the tenant ID, associated with the device ID included in the device registration confirmation request in the device management information 24e, is "unactivated", the cloud service 31 decides that the image forming apparatus 40 is not registered in the activated tenant.

Upon deciding at S403 that the image forming apparatus 40 is not registered in the activated tenant, the cloud service 31 notifies the device registration confirmation result indicating that the image forming apparatus 40 is registered only in the unactivated tenant, to the image forming apparatus 40 (S404). The cloud service 31 includes the tenant **ID** associated in the device management information 24e with the device ID included in the device registration confirmation request, and the representative address associated with the tenant ID in the tenant management information 24c, in the device registration confirmation result notified at S404.

Upon deciding at S403 that the image forming apparatus 40 is registered in the activated tenant, the cloud service 31 notifies the device registration confirmation result indicating that the image forming apparatus 40 is registered in the activated tenant, to the image forming apparatus 40 (S405). The cloud service 31 includes the tenant **ID** associated in the device management information 24e with the device **ID** included in the device registration confirmation request, and the **PIN** and the device manager authentication information associated in the device management information 24e with the device **ID** included in the device registration confirmation request, in the device registration confirmation result notified at S405.

After finishing the operation of S402, S404, or S405, the cloud service 31 finishes the operation specified in Fig. 19.

After finishing the operation of S101, the cloud application utilizer 48a of the image forming apparatus 40 decides whether the device registration confirmation result has been received from the cloud service 31, until deciding that the device registration confirmation result has been received from the cloud service 31 (S102), as shown in Fig. 12 to Fig. 18.

Upon deciding at S102 that the device registration confirmation result has been received from the cloud service 31, the cloud application utilizer 48a confirms the content of the device registration confirmation result received from the cloud service 31 (S103).

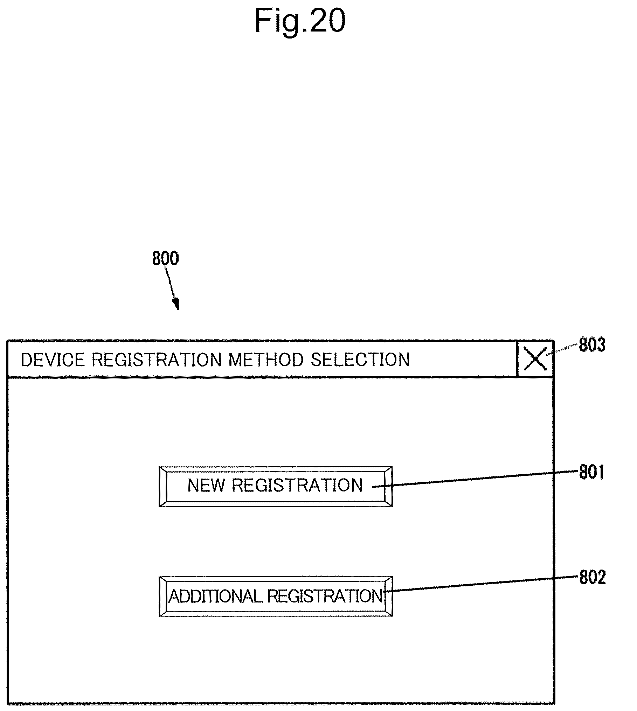

Upon confirming at S103 that the device registration confirmation result is indicating that the image forming apparatus 40 is not registered in the cloud service 31, the cloud application utilizer 48a displays a screen for selecting a method for registering the image forming apparatus 40 in the customer tenant (hereinafter, "device registration method selection screen") 800 (see Fig. 20), in the display device 42 (S121).

Fig. 20 illustrates an example of the device registration method selection screen 800.

The device registration method selection screen 800 shown in Fig. 20 includes a new registration button 801 serving as a widget for creating a tenant and newly registering the image forming apparatus, an additional registration button 802 serving as a widget for additionally registering the image forming apparatus in the existing tenant, and a close button 803 serving as a widget for closing the device registration method selection screen 800.

After finishing the operation of S121, the cloud application utilizer 48a of the image forming apparatus 40 decides whether any of the buttons in the device registration method selection screen 800 has been pressed, until deciding that one of the buttons in the device registration method selection screen 800 has been pressed (S122), as shown in Fig. 12 to Fig. 18.

Upon deciding at S122 that one of the buttons in the device registration method selection screen 800 has been pressed, the cloud application utilizer 48a identifies the button that has been pressed at S122 (S123).

Upon identifying at S123 that the close button 803 has been pressed at S122, the cloud application utilizer 48a erases the display of the device registration method selection screen 800 in the display device 42 (S124), and finishes the operation specified in Fig. 12 to Fig. 18.

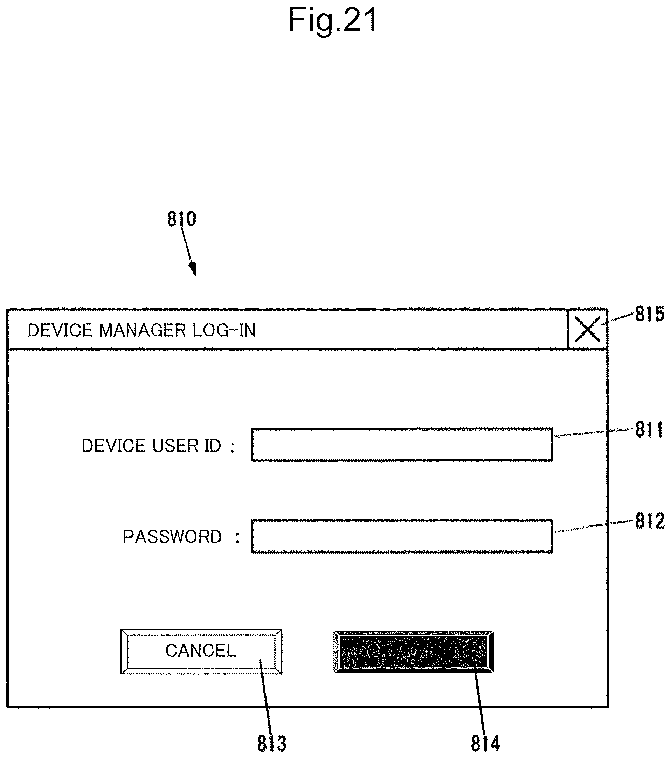

Upon identifying at S123 that the new registration button 801 has been pressed at S122, the cloud application utilizer 48a displays a screen for allowing the user to log in to the image forming apparatus 40 as the device manager of the image forming apparatus 40 (hereinafter, "device manager log-in screen") 810 (see Fig. 21), in the display device 42 (S141), as shown in Fig. 13.

Fig. 21 illustrates an example of the device manager log-in screen 810.

The device manager log-in screen 810 shown in Fig. 21 includes a textbox 811 serving as a widget for inputting the device user ID of the device manager, a textbox 812 serving as a widget for inputting the password of the device manager, a cancel button 813 for cancelling the logging-in to the image forming apparatus 40, a log-in button 814 for logging in to the image forming apparatus 40, and a close button 815 for closing the device manager log-in screen 810.

The log-in button 814 is grayed out and invalid, until the device manager log-in screen 810 assumes a specific state. The specific state refers to the state where the device user ID of a predetermined format is inputted to the textbox 811, and the password of a predetermined format is inputted to the textbox 812. Fig. 21 illustrates the state where the log-in button 814 is grayed out.

After finishing the operation of S141, the cloud application utilizer 48a of the image forming apparatus 40 decides whether any of the buttons in the device manager log-in screen 810 has been pressed, until deciding that one of the buttons in the device manager log-in screen 810 has been pressed (S142), as shown in Fig. 12 to Fig. 18.

Upon deciding at S142 that one of the buttons in the device manager log-in screen 810 has been pressed, the cloud application utilizer 48a identifies the button that has been pressed at S142 (S143).

Upon identifying at S143 that the close button 815 has been pressed at S142, the cloud application utilizer 48a erases the display of the device manager log-in screen 810 in the display device 42 (S144), and finishes the operation specified in Fig. 12 to Fig. 18.

Upon identifying at S143 that the cancel button 813 has been pressed at S142, the cloud application utilizer 48a executes the operation of S121.

Upon identifying at S143 that the log-in button 814 has been pressed at S142, the cloud application utilizer 48a performs the authentication of the device manager, based on the device user ID inputted to the textbox 811 at the time that the log-in button 814 was pressed, and the password inputted to the textbox 812 at the time that the log-in button 814 was pressed (S145). To be more specific, the cloud application utilizer 48a decides that the device manager has been successfully authenticated, when the combination of the device user ID inputted to the textbox 811 at the time that the log-in button 814 was pressed, and the password inputted to the textbox 812 at the time that the log-in button 814 was pressed, is registered in the device user management information 47c in association with the role "device manager". In contrast, when the combination of the device user ID inputted to the textbox 811 at the time that the log-in button 814 was pressed, and the password inputted to the textbox 812 at the time that the log-in button 814 was pressed, is not registered in the device user management information 47c in association with the role "device manager", the cloud application utilizer 48a decides that the authentication of the device manager has failed.

After finishing the operation of S145, the cloud application utilizer 48a confirms the result of the authentication performed at S145 (S146).

Upon deciding at S146 that the authentication of the device manager has failed, the cloud application utilizer 48a executes the operation of S141.

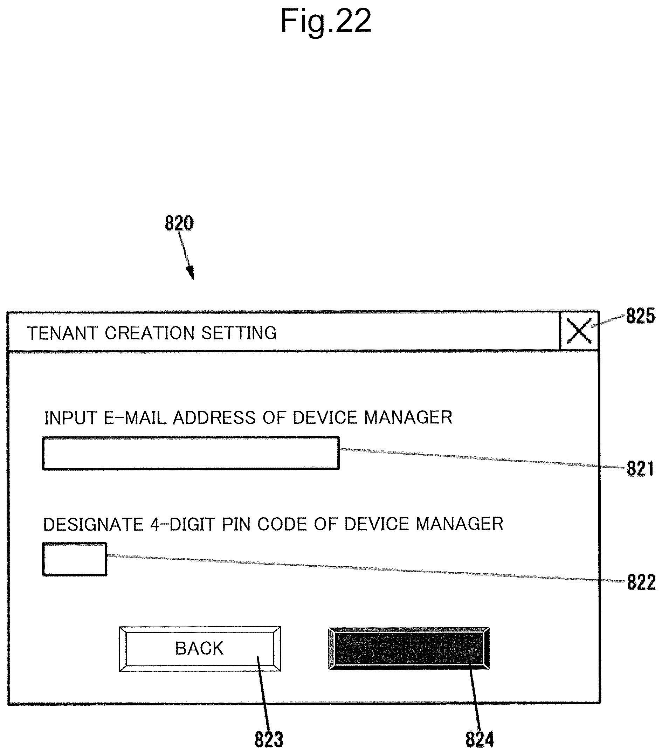

Upon deciding at S146 that the authentication of the device manager has succeeded, the cloud application utilizer 48a displays a screen for specifying the setting for creating the tenant (hereinafter, "tenant creation setting screen") 820 (see Fig. 22), in the display device 42 (S147).

Fig. 22 illustrates an example of the tenant creation setting screen 820.

The tenant creation setting screen 820 shown in Fig. 22 includes a textbox 821 serving as a widget for inputting the e-mail address of the device manager, a textbox 822 serving as a widget for inputting the PIN of the device manager, a back button 823 serving as a widget for returning to the device registration method selection screen 800 (see Fig. 20), a registration button 824 serving as a widget for creating the tenant, and a close button 825 serving as a widget for closing the tenant creation setting screen 820.

The registration button 824 is grayed out and invalid, until the tenant creation setting screen 820 assumes a specific state. The specific state refers to the state where the e-mail address of a predetermined format is inputted to the textbox 821, and the PIN of a predetermined format is inputted to the textbox 822. Fig. 22 illustrates the state where the registration button 824 is grayed out.

After finishing the operation of S147, the cloud application utilizer 48a of the image forming apparatus 40 decides whether any of the buttons in the tenant creation setting screen 820 has been pressed, until deciding that one of the buttons in the tenant creation setting screen 820 has been pressed (S148), as shown in Fig. 12 to Fig. 18.

Upon deciding at S148 that one of the buttons in the tenant creation setting screen 820 has been pressed, the cloud application utilizer 48a identifies the button that has been pressed at S148 (S149).

Upon identifying at S149 that the close button 825 has been pressed at S148, the cloud application utilizer 48a erases the display of the tenant creation setting screen 820 in the display device 42 (S150), and finishes the operation specified in Fig. 12 to Fig. 18.

Upon identifying at S149 that the back button 823 has been pressed at S148, the cloud application utilizer 48a executes the operation of S121.

Upon identifying at S149 that the registration button 824 has been pressed at S148, the cloud application utilizer 48a transmits information for creating the tenant and newly registering the image forming apparatus (hereinafter, "new registration information") to the new registration service 31c, by calling an application programming interface (API) of the new registration service 31c (S151). The new registration information includes the e-mail address inputted to the textbox 821 at the time that the registration button 824 was pressed, the PIN inputted to the textbox 822 at the time that the registration button 824 was pressed, the device ID of the image forming apparatus 40, the destination of the image forming apparatus 40, the device-used language of the image forming apparatus 40, the model name of the image forming apparatus 40, the product name of the image forming apparatus 40, and the program and the version thereof of the cloud application utilization program 47a, realizing the cloud application utilizer 48a. In the case where the proxy-use information in the cloud application setting information 47d indicates that a proxy server is to be used for communication with outside, the cloud application utilizer 48a uses the IP address and the host name of the proxy server and the port number thereof, specified in the cloud application setting information 47d, when transmitting the new registration information to the new registration service 31c at S151.

After finishing the operation of S151, the cloud application utilizer 48a decides whether the connection to the new registration service 31c has been established (S152).

Upon deciding at S152 that the connection to the new registration service 31c has been established, the cloud application utilizer 48a decides whether the notice of the information about the tenant (hereinafter, "tenant information notice") has been received from the new registration service 31c, until deciding that the tenant information notice has been received from the new registration service 31c (S153).

Upon deciding at S153 that the tenant information notice has been received from the new registration service 31c, the cloud application utilizer 48a confirms the content of the tenant information notice received from the new registration service 31c (S154).

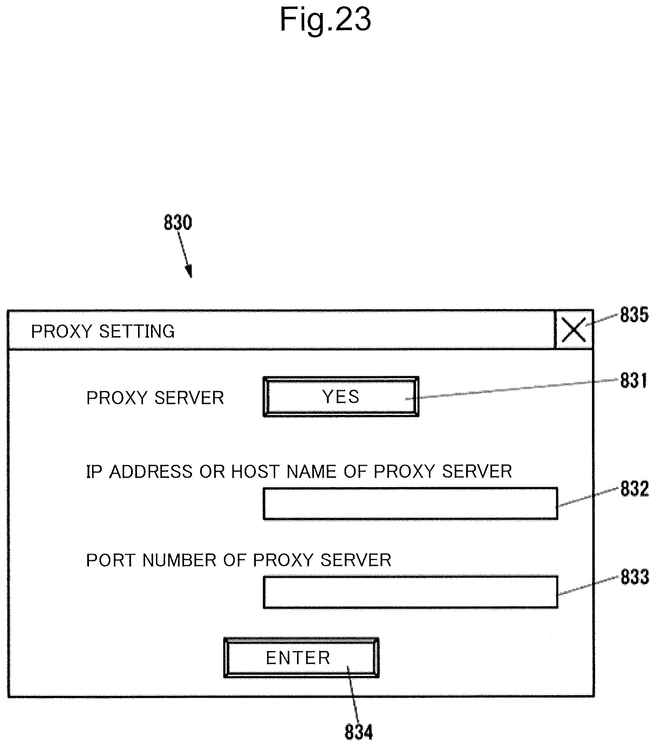

In contrast, upon deciding at S152 that the connection to the new registration service 31c has not been established at S151, the cloud application utilizer 48a displays a screen for setting the proxy (hereinafter, "proxy setting screen") 830 (see Fig. 23), in the display device 42 (S161).

Fig. 23 illustrates an example of the proxy setting screen 830.

The proxy setting screen 830 shown in Fig. 23 includes a toggle button 831 serving as a widget for instructing whether to use a proxy server, a textbox 832 serving as a widget for inputting the IP address or host name of the proxy server, a textbox 833 serving as a widget for inputting the port number of the proxy server, an enter button 834 serving as a widget for confirming the setting of the proxy server, and a close button 835 serving as a widget for closing the proxy setting screen 830.

After finishing the operation of S161, the cloud application utilizer 48a of the image forming apparatus 40 decides whether one of the enter button 834 and the close button 835 has been pressed, until deciding that one of the enter button 834 and the close button 835 has been pressed (S162), as shown in Fig. 12 to Fig. 18.

Upon deciding at S162 that one of the enter button 834 and the close button 835 has been pressed, the cloud application utilizer 48a identifies which of the enter button 834 and the close button 835 has been pressed at S162 (S163).

Upon identifying at S163 that the close button 835 has been pressed at S162, the cloud application utilizer 48a erases the display of the proxy setting screen 830 in the display device 42 (S164), and finishes the operation specified in Fig. 12 to Fig. 18.

Upon identifying at S163 that the enter button 834 has been pressed at S162, the cloud application utilizer 48a updates the cloud application setting information 47d with the instruction inputted to the toggle button 831 at the time that the enter button 834 was pressed, the IP address or host name of the proxy server inputted to the textbox 832 at the time that the enter button 834 was pressed, and the port number of the proxy server inputted to the textbox 833 at the time that the enter button 834 was pressed (S165), and executes the operation of S101.

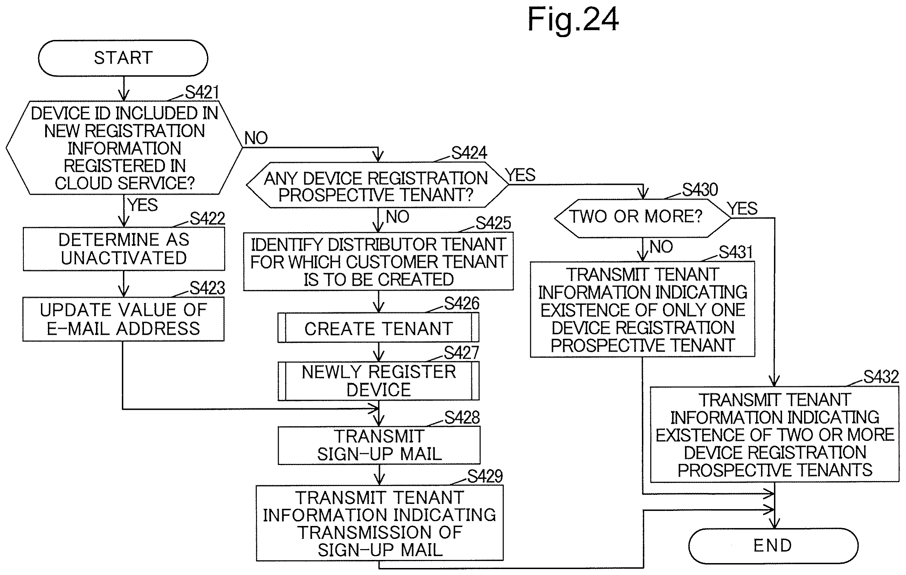

Fig. 24 is a flowchart showing an operation of the new registration service 31c, performed upon receipt of the new registration information.

Upon receipt of the new registration information transmitted at S151 from the cloud application utilizer 48a, the new registration service 31c registers various types of information included in the new registration information, in the cloud service 31. Hereunder, the registration of some of the information included in the new registration information will be described in detail. The new registration service 31c executes the operation specified in Fig. 24, upon receipt of the new registration information transmitted at S151 from the cloud application utilizer 48a.

Referring to Fig. 24, the new registration service 31c decides whether the device ID included in the new registration information received from the cloud application utilizer 48a is registered in the cloud service 31, on the basis of the device management information 24e (S421). When the device ID included in the new registration information received from the cloud application utilizer 48a is included in the device management information 24e, the cloud service 31 decides that the device ID is registered in the cloud service 31. In contrast, when the device ID included in the new registration information received from the cloud application utilizer 48a is not included in the device management information 24e, the cloud service 31 decides that the device ID is not registered in the cloud service 31.

Upon deciding at S421 that the device ID included in the new registration information received from the cloud application utilizer 48a is registered in the cloud service 31, the new registration service 31c sets the value of the "activation information", associated in the tenant management information 24c with the tenant ID, associated in the device management information 24e with the device ID included in the new registration information received from the cloud application utilizer 48a, to "unactivated" (S422).

After finishing the operation of S422, the new registration service 31c updates the value of the "representative address", associated in the tenant management information 24c with the tenant ID, associated in the device management information 24e with the device **ID** included in the new registration information received from the cloud application utilizer 48a, to the e-mail address included in the new registration information received from the cloud application utilizer 48a (S423).

Upon deciding at S421 that the device ID included in the new registration information received from the cloud application utilizer 48a is not registered in the cloud service 31, the new registration service 31c decides, on the basis of the tenant management information 24c, whether there are one or more activated customer tenants, the representative address of which accords with the e-mail address included in the new registration information received from the cloud application utilizer 48a (hereinafter, "device registration prospective tenant") (S424).

Upon deciding at S424 that there is no device registration prospective tenant, the new registration service 31c identifies the distributor tenant, for which the customer tenant is to be created (S425).

The new registration service 31c may identify at S425 the distributor tenant designated in advance by the provider of the cloud application provision system 20, as the distributor tenant for which the customer tenant is to be created. Instead, the new registration service 31c may identify the distributor tenant for which the customer tenant is to be created, in a different way.

For example, the new registration service 31c may identify the distributor tenant for which the customer tenant is to be created, on the basis of the new registration information received from the cloud application utilizer 48a. To be more specific, the new registration service 31c may identify the distributor tenant associated in advance with the application name included in the new registration information received from the cloud application utilizer 48a, as the distributor tenant for which the customer tenant is to be created. Alternatively, when the new registration information received from the cloud application utilizer 48a includes the telephone number of the service person, the new registration service 31c may identify the distributor tenant associated in advance with the telephone number, as the distributor tenant for which the customer tenant is to be created.

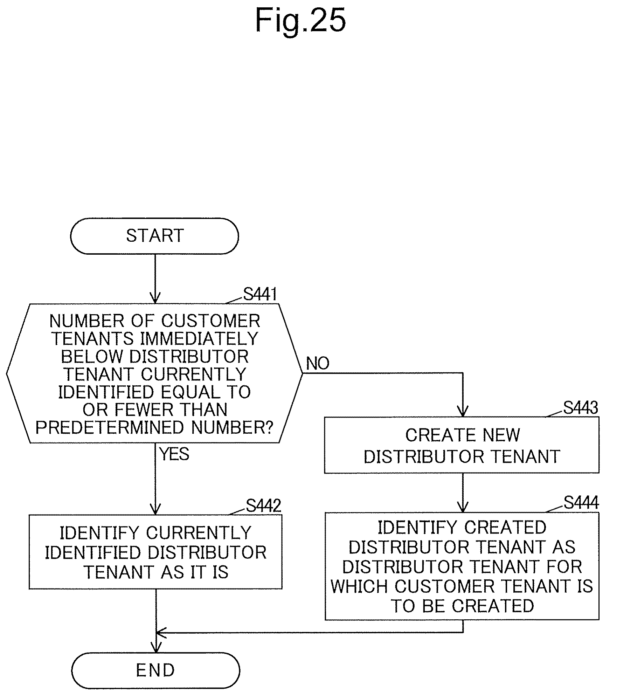

As another example, the new registration service 31c may identify the distributor tenant for which the customer tenant is to be created, through a process specified in Fig. 25.

Fig. 25 is a flowchart showing a part of the operation of the new registration service 31c, performed to identify the distributor for which the tenant customer tenant is to be created.

Referring to Fig. 25, the new registration service 31c decides whether the number of customer tenants located immediately under the distributor tenant, currently identified as the distributor tenant for which the customer tenant is to be created, is equal to or few than a predetermined number, for example ten thousand (S441).

Upon deciding at S441 that the number of customer tenants located immediately under the distributor tenant, currently identified as the distributor tenant for which the customer tenant is to be created, is equal to or few than the predetermined number, the new registration service 31c identifies the distributor tenant currently identified as the distributor tenant for which the customer tenant is to be created, as it is, as the distributor tenant for which the customer tenant is to be created (S442).

Upon deciding at S441 that the number of customer tenants located immediately under the distributor tenant, currently identified as the distributor tenant for which the customer tenant is to be created, is larger than the predetermined number, the new registration service 31 creates a new distributor tenant (S443). The new registration service 31c may add a serial number indicating the order that the distributor tenant has been created, to the tail end of the tenant ID of the distributor tenants, created through executing S443 a plurality of number of times, to facilitate the order that the distributor tenants have been created, through executing S443 the plurality of number of times, to be recognized.

After finishing the operation of S443, the new registration service 31c identifies the distributor tenant created at S443, as the distributor tenant for which the customer tenant is to be created (S444).

After finishing the operation of S442 or S444, the new registration service 31c finishes the operation specified in Fig. 25.

After finishing the operation of S425, the new registration service 31c executes a tenant creation process to create the customer tenant, as shown in Fig. 24 (S426).

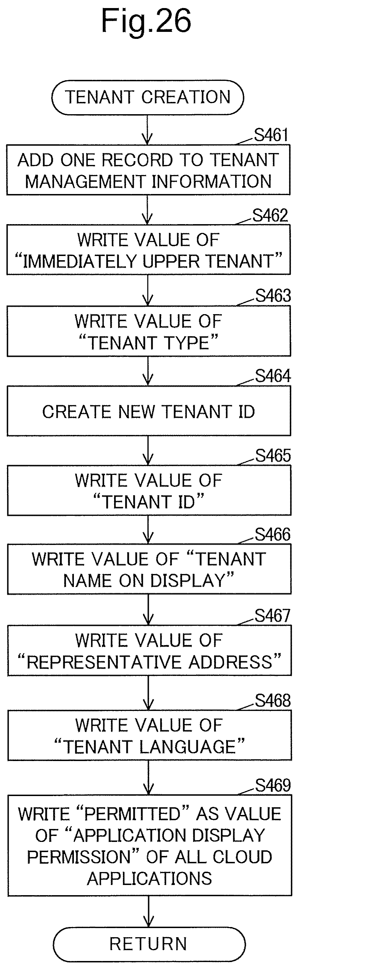

Fig. 26 is a flowchart showing the tenant creation process executed at S426.

Referring to Fig. 26, the new registration service 31c adds a record to the tenant management information 24c (S461).

After finishing the operation of S461, the new registration service 31c writes the tenant **ID** of the distributor tenant identified at S425, as the value of the "immediately upper tenant" of the record created at S461 (S462).

After finishing the operation of S462, the new registration service 31c writes "customer tenant", as the value of the "tenant type" of the record created at S461 (S463).

After finishing the operation of S462, the new registration service 31c generates a new tenant **ID** (S464). For example, the new registration service 31c may generate a character string, a first part of which is composed of a fixed character string of a predetermined number of characters, and remaining part of which is composed of a randomly generated character string of a predetermined number of characters, as the new tenant ID. When generating the new tenant ID, the new registration service 31c generates a tenant ID different from the existing tenant IDs.

After finishing the operation of S464, the new registration service 31c writes the tenant ID generated at S464, as the value of the "tenant ID" of the record created at S461 (S465).

After finishing the operation of S465, the new registration service 31c writes the tenant **ID** generated at S464 as the value of the "tenant name on display" of the record created at S461 (S466).

After finishing the operation of S466, the new registration service 31c writes the e-mail address included in the new registration information received from the cloud application utilizer 48a, as the value of the "representative address" of the record created at S461 (S467).

After finishing the operation of S467, the new registration service 31c writes the device-used language included in the new registration information received from the cloud application utilizer 48a, as the value of the "tenant language" of the record created at S461 (S468).

After finishing the operation of S468, the new registration service 31c writes "permitted" as the value of the "application display permission" of the record created at S461, with respect to all the cloud applications provided by the cloud application provision system 20 (S469), and finishes the tenant creation process specified in Fig. 26.

As described above, the new registration service 31c creates the customer tenant based on the new registration information received from the cloud application utilizer 48a, immediately under the distributor tenant identified at S425 (see Fig. 24), by executing the tenant creation at S426 (see Fig. 24).

After the tenant creation of S426, the new registration service 31c executes the new device registration, including newly registering the image forming apparatus in the tenant created by the tenant creation of S426 (S427), as shown in Fig. 24.

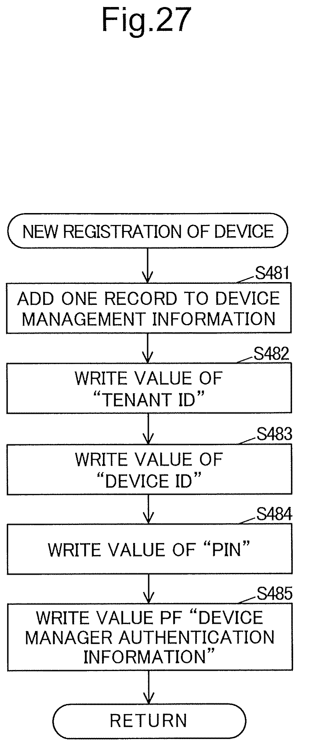

Fig. 27 is a flowchart showing an example of the new device registration process of S427.

Referring to Fig. 27, the new registration service 31c adds a record to the device management information 24e (S481).

After finishing the operation of S481, the new registration service 31c writes the tenant ID generated in the tenant creation of S426, as the value of the "tenant ID" of the record created at S481 (S482).

After finishing the operation of S482, the new registration service 31c writes the device ID included in the new registration information received from the cloud application utilizer 48a, as the value of the "device ID" of the record created at S481 (S483).

After finishing the operation of S483, the new registration service 31c writes the **PIN** included in the new registration information received from the cloud application utilizer 48a, as the value of the "PIN" of the record created at S481 (S484).

After finishing the operation of S484, the new registration service 31c writes the authentication information indicated by the device manager authentication information initial value 24f, as the value of the "device manager authentication information" of the record created at S481 (S485), and finishes the new device registration process specified in Fig. 27.

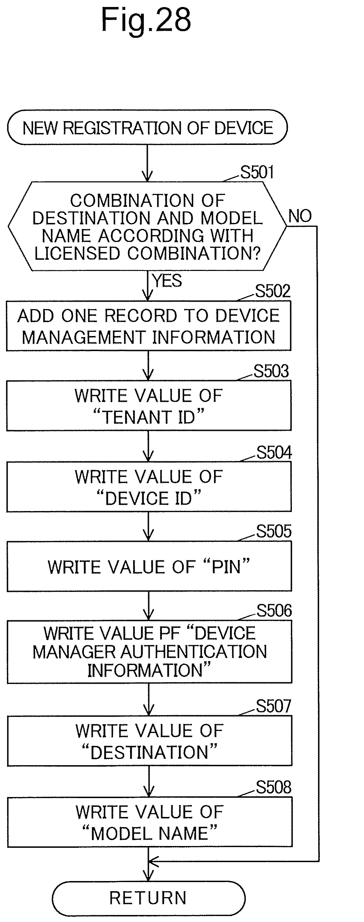

Here, in the case where the cloud application 32 provides a license, the new registration service 31c may execute the new device registration process specified in Fig. 28, instead of the process specified in Fig. 27, as the operation to be executed at S427. When the new registration service 31c executes the process specified in Fig. 28, the tenant management information 24c includes the number of licenses information, indicating the number of licenses provided by the cloud application 32, in association with the tenant ID. In addition, when the new registration service 31c executes the process specified in Fig. 28, the device management information 24e includes the destination and the model name of the image forming apparatus, in association with the device ID. Further, when the new registration service 31c executes the process specified in Fig. 28, the cloud application utilizer 48a includes the destination and the model name of the image forming apparatus 40, in the new registration information transmitted at S151.

Fig. 28 is a flowchart showing another example of the new device registration process of S427.

Referring to Fig. 28, the new registration service 31c decides whether the combination of the destination and the model name, included in the new registration information received from the cloud application utilizer 48a, accords with a specific combination allowed when the image forming apparatus itself possesses the license of the cloud application 32 (hereinafter, "licensed combination") (S501).

Upon deciding at S501 that the combination of the destination and the model name included in the new registration information received from the cloud application utilizer 48a discords from the licensed combination, the new registration service 31c finishes the new device registration process specified in Fig. 28.

Upon deciding at S501 that the combination of the destination and the model name included in the new registration information received from the cloud application utilizer 48a accords with the licensed combination, the new registration service 31c adds a record to the device management information 24e (S502).

After finishing the operation of S502, the new registration service 31c writes the tenant ID generated in the tenant creation of S426, as the value of the "tenant ID" of the record created at S502 (S503).

After finishing the operation of S503, the new registration service 31c writes the device **ID** included in the new registration information received from the cloud application utilizer 48a, as the value of the "device ID" of the record created at S502 (S504).

After finishing the operation of S504, the new registration service 31c writes the PIN included in the new registration information received from the cloud application utilizer 48a, as the value of the "PIN" of the record created at S502 (S505).

After finishing the operation of S505, the new registration service 31c writes the authentication information represented by the device manager authentication information initial value 24f, as the value of the "device manager authentication information" of the record created at S502 (S506).

After finishing the operation of S506, the new registration service 31c writes the destination included in the new registration information received from the cloud application utilizer 48a, as the value of the "destination" of the record created at S502 (S507).

After finishing the operation of S507, the new registration service 31c writes the model name included in the new registration information received from the cloud application utilizer 48a, as the value of the "model name" of the record created at S502 (S508), and finishes the new device registration process specified in Fig. 28.

Referring again to Fig. 24, after the operation of S423, or the new device registration of S427, the new registration service 31c transmits an e-mail for registering the tenant manager (hereinafter, "sign-up mail"), to the e-mail address included in the new registration information received from the cloud application utilizer 48a (S428).

After finishing the operation of S428, the new registration service 31c transmits a tenant information notice indicating that the sign-up mail has been transmitted, to the image forming apparatus 40 (S429), and finishes the operation specified in Fig. 24.

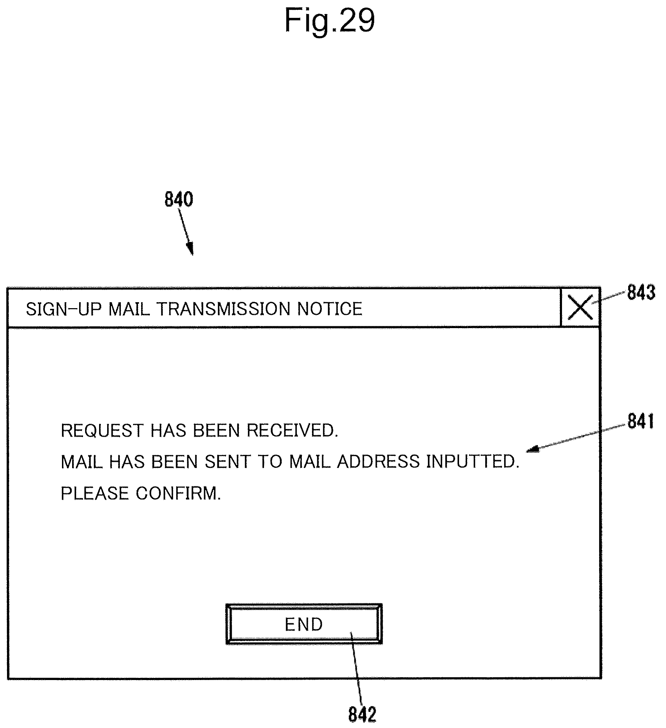

As shown in Fig. 12 to Fig. 18, upon deciding at S154 that the tenant information notice is indicating the transmission of the sign-up mail, the cloud application utilizer 48a of the image forming apparatus 40 displays a screen for notifying the transmission of the sign-up mail (hereinafter, "sign-up mail transmission notice screen") 840 (see Fig. 29), in the display device 42 (S181).

Fig. 29 illustrates an example of the sign-up mail transmission notice screen 840.

The sign-up mail transmission notice screen 840 shown in Fig. 29 includes a text 841 exhibiting a message for notifying the transmission of the sign-up mail, a finish button 842 serving as a widget for finishing the execution of the cloud application utilization program 47a, and a close button 843 serving as a widget for closing the sign-up mail transmission notice screen 840.

After finishing the operation of S181, the cloud application utilizer 48a decides whether one of the finish button 842 and the close button 843 has been pressed, until deciding that one of the finish button 842 and the close button 843 has been pressed (S182), as shown in Fig. 12 to Fig. 18.

Upon deciding at S182 that one of the finish button 842 and the close button 843 has been pressed, the cloud application utilizer 48a erases the display of the sign-up mail transmission notice screen 840 in the display device 42 (S183), and finishes the operation specified in Fig. 12 to Fig. 18.

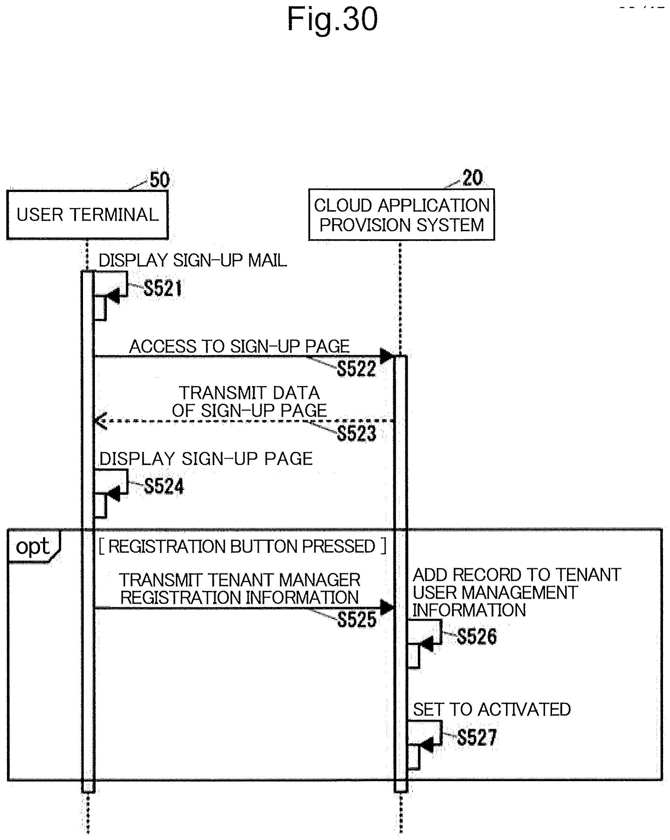

Fig. 30 is a sequence chart showing an operation of the system 10, performed to register the tenant manager via the sign-up mail.

The user can receive the sign-up mail transmitted by the new registration service 31c at S428 (see Fig. 24), via the mailer 55a of the user terminal 50. Upon receipt of the sign-up mail transmitted by the new registration service 31c at S428, the mailer 55a displays the sign-up mail in the display device 52, as shown in Fig. 30 (S521).

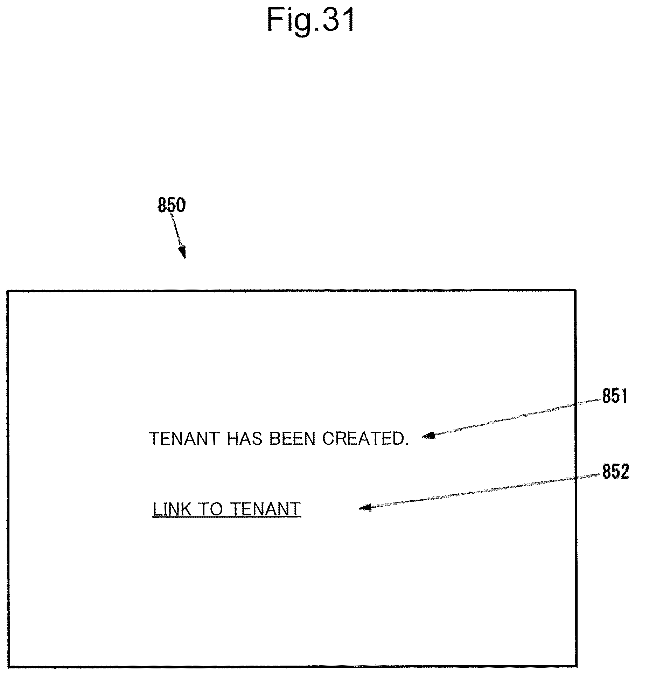

Fig. 31 illustrates an example of the main text 850 of the sign-up mail, displayed through the operation shown in Fig. 30.

The main text 850 shown in Fig. 31 includes a message 851 indicating that the tenant has been created, and a link 852 to the sign-up page of the tenant created at S426.

The user can click the link 852, through the operation device 51 of the user terminal 50. When the link 852 is clicked, the mailer 55a instructs the web browser 55b to make access to the sign-up page designated by the link 852. Accordingly, the web browser 55b makes access to the sign-up page designated by the link 852, as shown in Fig. 30 (S522).

When the sign-up page is accessed at S522, the tenant management service 31a of the cloud service 31 transmits the data of the sign-up page accessed at s522, to the web browser 55b (S523).

When the data of the sign-up page is transmitted at S523, the web browser 55b of the user terminal 50 displays the sign-up page in the display device 42 (S524).

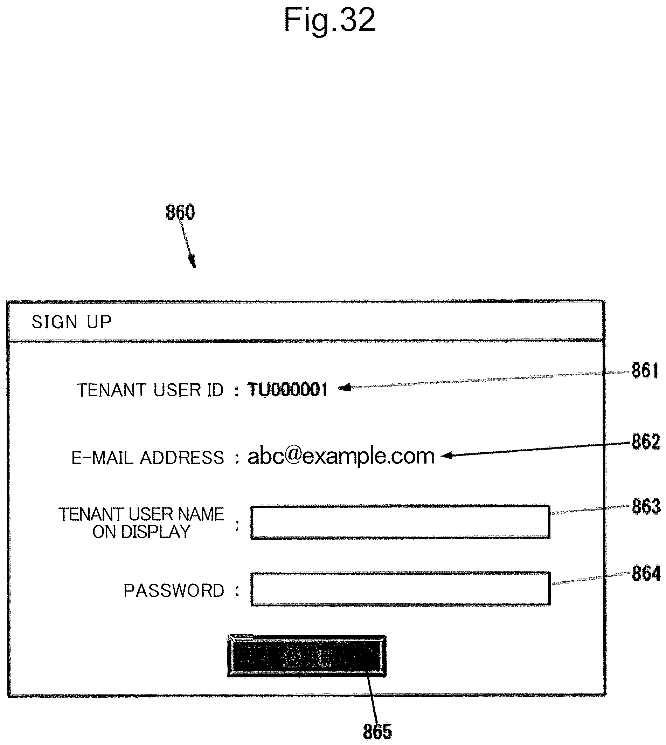

Fig. 32 illustrates an example of the sign-up page 860, displayed trough the operation specified in Fig. 30.

The sign-up page 860 shown in Fig. 32 includes a text 861 indicating the tenant user ID of the tenant manager, a text 862 indicating the e-mail address of the tenant manager, a textbox 863 serving as a widget for inputting the tenant user name on display of the tenant manager, a textbox 864 serving as a widget for inputting the password of the tenant manager, and a registration button 865 serving as a widget for signing up of the tenant manager. The text 861 indicates the tenant user ID generated by the cloud service 31. When generating the tenant user ID, the cloud service 31 generates the tenant user **ID** different from the other existing tenant user IDs. The text 862 indicates the e-mail address registered at S423 (see Fig. 24) or S467 (see Fig. 26).

The registration button 865 is grayed out and invalid, until the sign-up page 860 assumes a specific state. The specific state refers to the state where the tenant user name on display of a predetermined format is inputted to the textbox 863, and the password of a predetermined format is inputted to the textbox 864. Fig. 32 illustrates the state where the registration button 865 is grayed out.

As shown in Fig. 30, when the registration button 865 is pressed, the web browser 55b transmits the information for registering the tenant manager (hereinafter, "tenant manager registration information"), to the cloud service 31 (S525). The web browser 55b includes the tenant user ID in the text 861, the e-mail address in the text 862, the tenant user name on display inputted to the textbox 863 at the time that the registration button 865 was pressed, and the password inputted to the textbox 864 at the time that the registration button 865 was pressed, in the tenant manager registration information.

Upon receipt of the tenant manager registration information transmitted at S525 from the web browser 55b, the tenant management service 31a of the cloud service 31 adds a record based on the tenant manager registration information received, to the tenant user management information 24d (S526). Here, the tenant management service 31a sets the tenant user ID included in the tenant manager registration information, as the value of the "tenant user ID" of the record added at S526. The tenant management service 31a sets the e-mail address included in the tenant manager registration information, as the value of the "e-mail address" of the record added at S526. The tenant management service 31a sets the tenant user name on display included in the tenant manager registration information, as the value of the "tenant user name on display" of the record added at S526. The tenant management service 31a sets the password included in the tenant manager registration information, as the value of the "password" of the record added at S526. The tenant management service 31a sets the tenant ID of the tenant corresponding to the sign-up page accessed at S522, as the value of the "tenant ID" of the record added at S526. The tenant management service 31a sets "tenant manager", as the value of the "role" of the record added at S526.

After finishing the operation of S526, the tenant management service 31a sets "activated" as the value of the activation information, associated in the tenant management information 24c with the tenant **ID** of the tenant corresponding to the sign-up page accessed at S522 (S527).

Referring again to Fig. 24, upon deciding at S424 that there is at least one device registration prospective tenant, the new registration service 31c decides whether a plurality of device registration prospective tenants exist (S430).

Upon deciding at S430 that a plurality of device registration prospective tenants do not exist, the new registration service 31c transmits the tenant information notice indicating that there is only one device registration prospective tenant, to the image forming apparatus 40 (S431). The new registration service 31c includes the tenant ID of the device registration prospective tenant, and the tenant name on display associated with the tenant ID of the device registration prospective tenant in the tenant management information 24c, in the tenant information notice transmitted at S431.

After finishing the operation of S431, the new registration service 31c finishes the operation specified in Fig. 24.

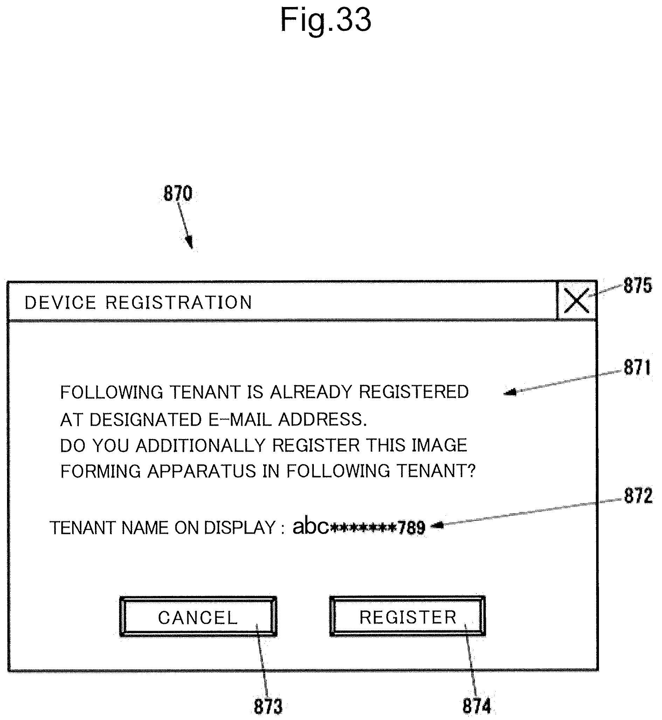

Referring again to Fig. 12 to Fig. 18, upon deciding at S154 that the tenant information notice is indicating that there is only one device registration prospective tenant, the cloud application utilizer 48a of the image forming apparatus 40 displays a screen for registering the image forming apparatus 40 in the device registration prospective tenant, identified with the tenant ID included in the tenant information notice received from the new registration service 31c (hereinafter, "notified tenant device registration screen") 870 (see Fig. 33), in the display device 42 (S201).

Fig. 33 illustrates an example of the notified tenant device registration screen 870.

The notified tenant device registration screen 870 shown in Fig. 33 includes a text 871 exhibiting a message asking the user whether to register the image forming apparatus 40, in the device registration prospective tenant identified with the tenant ID included in the tenant information notice received from the new registration service 31c, a text 872 exhibiting the tenant name on display included in the tenant information notice received from the new registration service 31c, a cancel button 873 serving as a widget for suspending the registration of the image forming apparatus 40 in the customer tenant, a registration button 874 serving as a widget for registering the image forming apparatus 40 in the device registration prospective tenant identified with the tenant **ID** included in the tenant information notice received from the new registration service 31c, and a close button 875 serving as a widget for closing the notified tenant device registration screen 870. The text 872 exhibits a part of the tenant name on display in asterisks.

After finishing the operation of S201, the cloud application utilizer 48a of the image forming apparatus 40 decides whether any of the buttons in the notified tenant device registration screen 870 has been pressed, until deciding that one of the buttons in the notified tenant device registration screen 870 has been pressed (S202), as shown in Fig. 12 to Fig. 18.

Upon deciding at S202 that one of the buttons in the notified tenant device registration screen 870 has been pressed, the cloud application utilizer 48a identifies the button that has been pressed at S202 (S203).

Upon identifying at S203 that the close button 875 has been pressed at S202, the cloud application utilizer 48a erases the display of the notified tenant device registration screen 870 in the display device 42 (S204), and finishes the operation specified in Fig. 12 to Fig. 18.

Upon identifying at S203 that the cancel button 873 has been pressed at S202, the cloud application utilizer 48a executes the operation of S121.

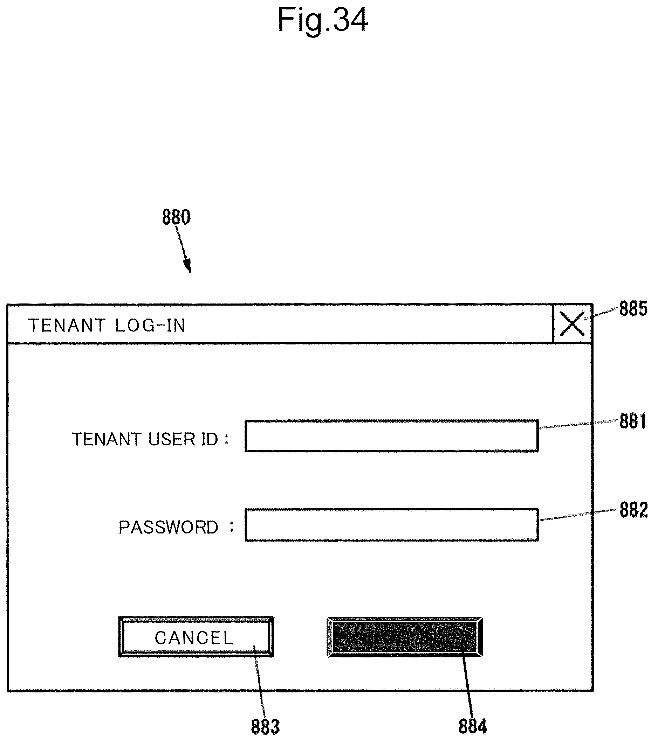

Upon identifying at S203 that the registration button 874 has been pressed at S202, the cloud application utilizer 48a displays a screen for causing the user to log in to the tenant (hereinafter, "tenant log-in screen") 880 (see Fig. 34), in the display device 42 (S205).

Fig. 34 illustrates an example of the tenant log-in screen 880.

The tenant log-in screen 880 shown in Fig. 34 includes a textbox 881 serving as a widget for inputting the tenant user ID, a textbox 882 serving as a widget for inputting the password of the tenant user, a cancel button 883 for cancelling the logging-in to the tenant, a log-in button 884 for logging in to the tenant, and a close button 885.

The log-in button 884 is grayed out and invalid, until the tenant log-in screen 880 assumes a specific state. The specific state refers to the state where the tenant user ID of a predetermined format is inputted to the textbox 881, and the password of a predetermined format is inputted to the textbox 882. Fig. 34 illustrates the state where the log-in button 884 is grayed out.

After finishing the operation of S205, the cloud application utilizer 48a of the image forming apparatus 40 decides whether any of the buttons in the tenant log-in screen 880 has been pressed, until deciding that one of the buttons in the tenant log-in screen 880 has been pressed (S206), as shown in Fig. 12 to Fig. 18.

Upon deciding at S206 that one of the buttons in the tenant log-in screen 880 has been pressed, the cloud application utilizer 48a identifies the button that has been pressed at S206 (S207).

Upon identifying at S207 that the close button 885 has been pressed at S206, the cloud application utilizer 48a erases the display of the tenant log-in screen 880 in the display device 42 (S208), and finishes the operation specified in Fig. 12 to Fig. 18.

Upon identifying at S207 that the cancel button 883 has been pressed at S206, the cloud application utilizer 48a executes the operation of S121.

Upon identifying at S207 that the log-in button 884 has been pressed at S206, the cloud application utilizer 48a transmits a request to register the image forming apparatus 40 in the customer tenant identified with the tenant ID included in the tenant information notice received from the new registration service 31c, in other words the customer tenant notified by the new registration service 31c (hereinafter, "device registration request") to the device management service 31b, by calling the API thereof (S209). The cloud application utilizer 48a includes the tenant ID included in the tenant information notice received from the new registration service 31c, the tenant user ID inputted to the textbox 881 at the time that the log-in button 884 was pressed, the password inputted to the textbox 882 at the time that the log-in button 884 was pressed, the device ID of the image forming apparatus 40, and the PIN included in the new registration information transmitted to the new registration service 31c at S151, in the device registration request transmitted at S209.

After finishing the operation of S209, the cloud application utilizer 48a finishes the operation specified in Fig. 12 to Fig. 18.

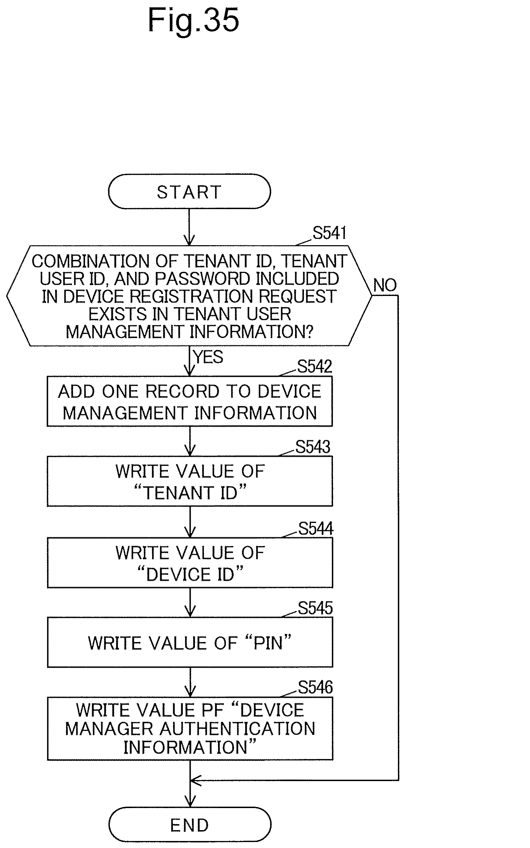

Fig. 35 is a flowchart showing an example of the operation of the device management service 31b, performed upon receipt of the device registration request.

Upon receipt of the device registration request (hereinafter "subject device registration request", in the description of the operation specified in Fig. 35), the device management service 31b executes the operation specified in Fig. 35.

Referring to Fig. 35, the device management service 31b decides whether the tenant user management information 24d includes a record having the combination of the tenant ID, the tenant user ID, and the password included in the subject device registration request (S541).

Upon deciding at S541 that the tenant user management information 24d does not include the record having the combination of the tenant ID, the tenant user ID, and the password included in the subject device registration request, the device management service 31b finishes the operation specified in Fig. 35.

Upon deciding at S541 that the tenant user management information 24d includes the record having the combination of the tenant ID, the tenant user ID, and the password included in the subject device registration request, the device management service 31b adds a record to the device management information 24e (S542).

After finishing the operation of S542, the device management service 31b writes the tenant ID included in the subject device registration request, as the value of the "tenant ID" of the record created at S542 (S543).

After finishing the operation of S543, the device management service 31b writes the device ID included in the subject device registration request, as the value of the "device ID" of the record created at S542 (S544).

After finishing the operation of S544, the device management service 31b writes the PIN included in the subject device registration request, as the value of the "PIN" of the record created at S542 (S545).

After finishing the operation of S545, the device management service 31b writes the authentication information indicated by the device manager authentication information initial value 24f, as the value of the "device manager authentication information" of the record created at S542 (S546), and finishes the operation specified in Fig. 35.

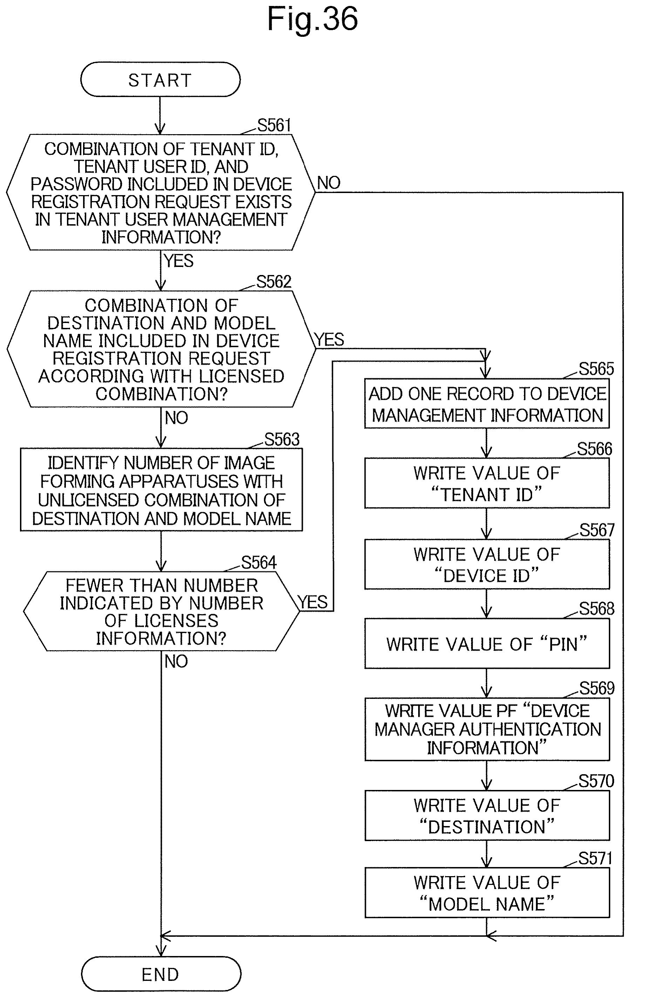

Here, in the case where the cloud application 32 provides a license, the device management service 31b may execute the operation specified in Fig. 36, instead of the operation specified in Fig. 35, upon receipt of the device registration request. When the device management service 31b executes the operation specified in Fig. 36, the tenant management information 24c includes the number of licenses information, indicating the number of licenses in the cloud application 32, in association with the tenant ID. In addition, when the device management service 31b executes the operation specified in Fig. 36, the device management information 24e includes the destination and the model name of the image forming apparatus, in association with the device ID. Further, when the device management service 31b executes the operation specified in Fig. 36, the cloud application utilizer 48a includes the destination and the model name of the image forming apparatus 40, in the device registration request.

Fig. 36 is a flowchart showing another example of the operation of the device management service 31b, performed upon receipt of the device registration request.

As shown in Fig. 36, the device management service 31b decides whether the record including the combination of the tenant ID, the tenant user ID, and the password, included in the subject device registration request, is included in the tenant user management information 24d (S561).

Upon deciding at S561 that the record including the combination of the tenant ID, the tenant user ID, and the password, included in the subject device registration request, is not included in the tenant user management information 24d, the device management service 31b finishes the operation specified in Fig. 36.

Upon deciding at S561 that the record including the combination of the tenant ID, the tenant user ID, and the password, included in the subject device registration request, is not included in the tenant user management information 24d, the device management service 31b decides whether the combination of the destination and the model name, included in the subject device registration request, accords with the licensed combination (S562).

Upon deciding at S562 that the combination of the destination and the model name, included in the subject device registration request, discords from the licensed combination, the new registration service 31c identifies the number of image forming apparatuses, having the combination of the destination and the model name discording from the licensed combination, among the image forming apparatuses associated with the tenant ID included in the subject device registration request in the device management information 24e (S563).

After finishing the operation of S563, the new registration service 31c decides whether the number identified at S563 is fewer than the number indicated by the number of licenses information, associated with the tenant ID included in the subject device registration request in the tenant management information 24c (S564).

Upon deciding at S564 that the number identified at S563 is not fewer than the number indicated by the number of licenses information, associated with the tenant ID included in the subject device registration request in the tenant management information 24c, the new registration service 31c finishes the operation specified in Fig. 36.

Upon deciding at S562 that the combination of the destination and the model name, included in the subject device registration request, accords with the licensed combination, or deciding at S564 that the number identified at S563 is fewer than the number indicated by the number of licenses information, associated with the tenant ID included in the subject device registration request in the tenant management information 24c, the new registration service 31c adds a record to the device management information 24e (S565).

After finishing the operation of S565, the device management service 31b writes the tenant **ID** included in the subject device registration request, as the value of the "tenant ID" of the record created at S565 (S566).

After finishing the operation of S566, the device management service 31b writes the device ID included in the subject device registration request, as the value of the "device ID" of the record created at S565 (S567).

After finishing the operation of S567, the device management service 31b writes the PIN included in the subject device registration request, as the value of the "PIN" of the record created at S565 (S568).

After finishing the operation of S568, the device management service 31b writes the authentication information indicated by the device manager authentication information initial value 24f, as the value of the "device manager authentication information" of the record created at S565 (S569).

After finishing the operation of S569, the device management service 31b writes the destination included in the subject device registration request, as the value of the "destination" of the record created at S565 (S570).

After finishing the operation of S570, the device management service 31b writes the model name included in the subject device registration request, as the value of the "model name" of the record created at S565 (S571), and finishes the operation specified in Fig. 36.

Referring again to Fig. 24, upon deciding at S430 that a plurality of device registration prospective tenants exist, the new registration service 31c transmits the tenant information notice indicating that a plurality of device registration prospective tenants exist, to the image forming apparatus 40 (S432), and finishes the operation specified in Fig. 24.

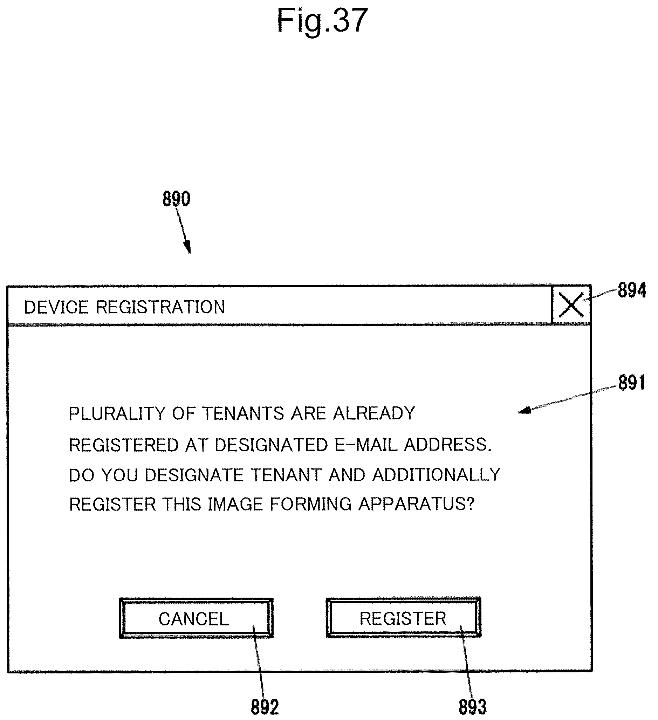

Referring to Fig. 12 to Fig. 18, upon deciding at S154 that the tenant information notice is indicating that a plurality of device registration prospective tenants exist, the cloud application utilizer 48a of the image forming apparatus 40 displays a screen for registering the image forming apparatus 40 in the customer tenant designated by the user (hereinafter, "designated tenant device registration screen") 890 (see Fig. 37), in the display device 42 (S221).

Fig. 37 illustrates an example of the designated tenant device registration screen 890.

The designated tenant device registration screen 890 shown in Fig. 37 includes a text 891 representing a message asking the user whether to designate the customer tenant and register the image forming apparatus 40, a cancel button 892 serving as a widget for suspending the registration of the image forming apparatus 40 in the customer tenant, a registration button 893 serving as a widget for designating the customer tenant and registering the image forming apparatus 40, and a close button 894 serving as a widget for closing the designated tenant device registration screen 890.

After finishing the operation of S221, the cloud application utilizer 48a of the image forming apparatus 40 decides whether any of the buttons in the designated tenant device registration screen 890 has been pressed, until deciding that one of the buttons in the designated tenant device registration screen 890 has been pressed (S206), as shown in Fig. 12 to Fig. 18 (S222).

Upon deciding at S222 that one of the buttons in the designated tenant device registration screen 890 has been pressed, the cloud application utilizer 48a identifies the button pressed at S222 (S223).

Upon identifying at S223 that the close button 894 has been pressed at S222, the cloud application utilizer 48a erases the display of the designated tenant device registration screen 890 in the display device 42 (S224), and finishes the operation specified in Fig. 12 to Fig. 18.

Upon identifying at S223 that the cancel button 892 has been pressed at S222, the cloud application utilizer 48a executes the operation of S121.

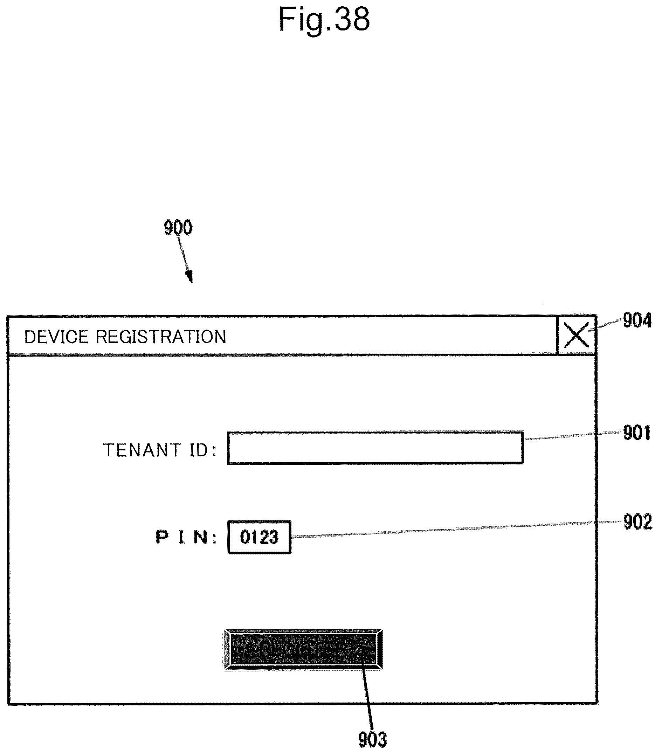

Upon identifying at S223 that the registration button 893 has been pressed at S222, the cloud application utilizer 48a displays a screen for registering the image forming apparatus 40 in the customer tenant, the screen including the PIN of the device manager of the image forming apparatus 40 automatically inputted (hereinafter, "device registration screen") 900 (see Fig. 38), in the display device 42 (S225).

Fig. 38 illustrates an example of the device registration screen 900, including the automatically inputted PIN.

The device registration screen 900 shown in Fig. 38 includes a textbox 901 serving as a widget for inputting the tenant ID of the customer tenant in which the image forming apparatus 40 is registered, a textbox 902 serving as a widget for inputting the PIN of the device manager of the image forming apparatus 40, a registration button 903 serving as a widget for registering the image forming apparatus 40 in the customer tenant identified with the tenant ID inputted in the textbox 901, and a close button 904 serving as a widget for closing the device registration screen 900.

When displaying the device registration screen 900 at S225, the cloud application utilizer 48a inputs the PIN included in the new registration information transmitted to the new registration service 31c at S151, to the textbox 902.

The registration button 903 is grayed out and invalid, until the device registration screen 900 assumes a specific state. The specific state refers to the state where the tenant ID of a predetermined format is inputted to the textbox 901, and the PIN of a predetermined format is inputted to the textbox 902. Fig. 38 illustrates the state where the registration button 903 is grayed out.

After finishing the operation of S225, the cloud application utilizer 48a of the image forming apparatus 40 decides whether any of the buttons in the device registration screen 900 has been pressed, until deciding that one of the buttons in the device registration screen 900 has been pressed (S226), as shown in Fig. 12 to Fig. 18.

Upon deciding at S226 that one of the buttons in the device registration screen 900 has been pressed, the cloud application utilizer 48a identifies the button pressed at S226 (S227).

Upon identifying at S227 that the close button 904 has been pressed at S226, the cloud application utilizer 48a erases the display of the device registration screen 900 in the display device 42 (S228), and finishes the operation specified in Fig. 12 to Fig. 18.

Upon identifying at S227 that the registration button 903 has been pressed at S226, the cloud application utilizer 48a displays a tenant log-in screen 880 (see Fig. 34), in the display device 42 (S229).

After finishing the operation of S229, the cloud application utilizer 48a decides whether any of the buttons in the tenant log-in screen 880 has been pressed, until deciding that one of the buttons in the tenant log-in screen 880 has been pressed (S230).

Upon deciding at S230 that one of the buttons in the tenant log-in screen 880 has been pressed, the cloud application utilizer 48a identifies the button pressed at S230 (S231).

Upon identifying at S231 that the close button 885 has been pressed at S230, the cloud application utilizer 48a executes the operation of S208.

Upon identifying at S231 that the cancel button 883 has been pressed at S230, the cloud application utilizer 48a executes the operation of S121.

Upon identifying at S231 that the log-in button 884 has been pressed at S230, the cloud application utilizer 48a transmits the device registration request for registering the image forming apparatus 40 in the customer tenant identified with the tenant ID inputted to the textbox 901 at the time that the registration button 903 was pressed, in other words the tenant designated by the user, to the device management service 31b by calling the API thereof (S232). The cloud application utilizer 48a includes the tenant ID inputted to the textbox 901 at the time that the registration button 903 was pressed, the tenant user ID inputted to the textbox 881 at the time that the log-in button 884 was pressed, the password inputted to the textbox 882 at the time that the log-in button 884 was pressed, the device ID of the image forming apparatus 40, and the PIN inputted to the textbox 902 at the time that the registration button 903 was pressed, in the device registration request.

After finishing the operation of S232, the cloud application utilizer 48a finishes the operation specified in Fig. 12 to Fig. 18.

Upon receipt of the device registration request, the device management service 31b executes the operation specified in Fig. 35 or Fig. 36, as described above.

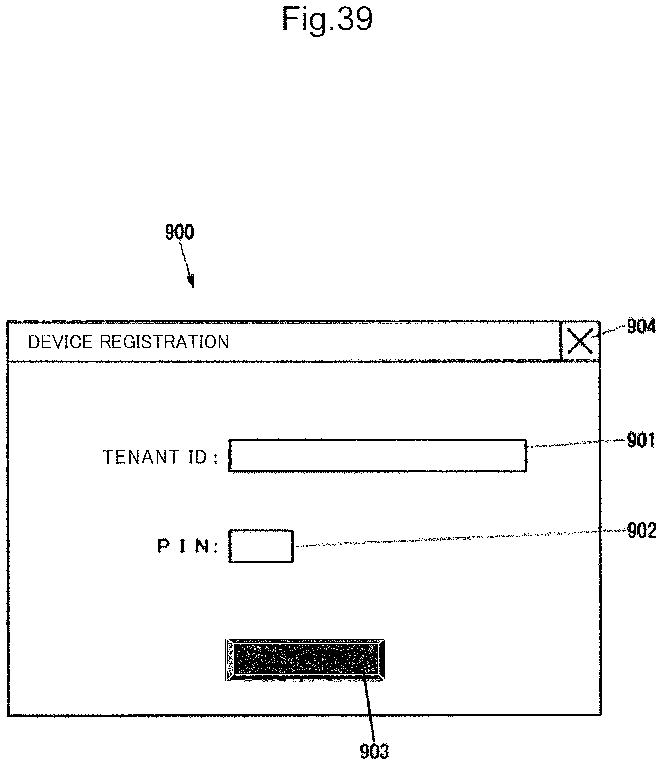

As shown in Fig. 12 to Fig. 18, upon deciding at S123 that the button identified to have been pressed at S122 is an additional registration button 802, the cloud application utilizer 48a of the image forming apparatus 40 displays a device registration screen 900 (see Fig. 39) in the display device 42 (S241).

Fig. 39 illustrates an example of the device registration screen 900, to which the PIN has not been inputted.

The device registration screen 900 displayed at S241 (see Fig. 39) is different from the device registration screen 900 displayed at S225 (see Fig. 38), in that the PIN is not inputted to the textbox 902.

After finishing the operation of S241, the cloud application utilizer 48a of the image forming apparatus 40 executes the operation of S226, as shown in Fig. 12 to Fig. 18.

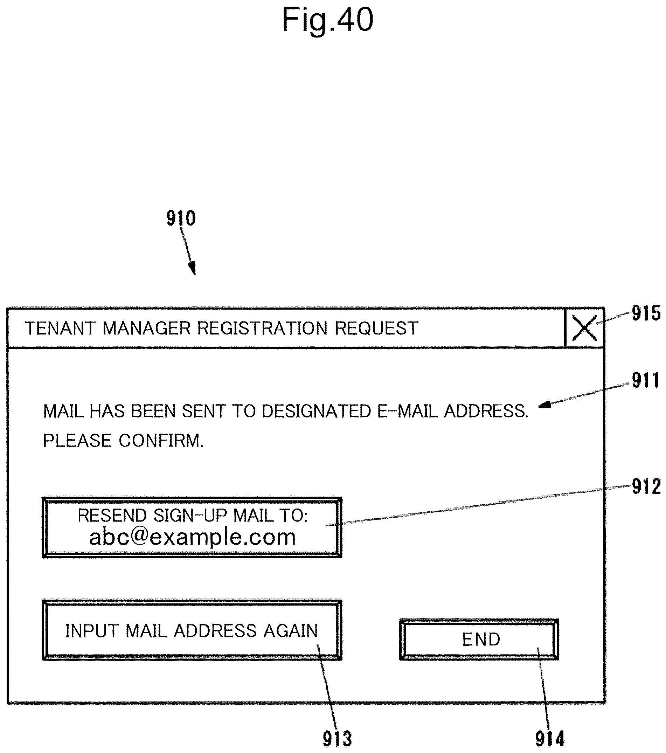

Upon deciding at S103 that the device registration confirmation result is indicating that the image forming apparatus 40 is only registered in the unactivated tenant, the cloud application utilizer 48a displays a screen for requesting the user to register the tenant manager (hereinafter, "tenant manager registration request screen") 910 (see Fig. 40) (S261).

Fig. 40 illustrates an example of the tenant manager registration request screen 910.

As shown in Fig. 40, the tenant manager registration request screen 910 includes a text 911 representing a message requesting the user to register the tenant manager, a resend button 912 serving as a widget for transmitting the sign-up mail again, a reinput button 913 for inputting the e-mail address again, an end button 914 serving as a widget for finishing the execution of the cloud application utilization program 47a, and a close button 915 serving as a widget for closing the tenant manager registration request screen 910.

The cloud application utilizer 48a displays the representative address included in the device registration confirmation result received from the cloud service 31, in the resend button 912.

After finishing the operation of S261, the cloud application utilizer 48a of the image forming apparatus 40 decides whether any of the buttons in the tenant manager registration request screen 910 has been pressed, until deciding that one of the buttons in the tenant manager registration request screen 910 has been pressed (S262), as shown in Fig. 12 to Fig. 18.

Upon deciding at S263 that one of the buttons in the tenant manager registration request screen 910 has been pressed, the cloud application utilizer 48a identifies the button pressed at S262 (S263).

Upon identifying at S263 that the finish button 914 or the close button 915 has been pressed at S262, the cloud application utilizer 48a erases the display of the tenant manager registration request screen 910 in the display device 42 (S264), and finishes the operation specified in Fig. 12 to Fig. 18.

Upon identifying at S263 that the resend button 912 has been pressed at S262, the cloud application utilizer 48a transmits a request to retransmit the sign-up mail (hereinafter, "sign-up mail retransmission request") to the cloud service 31 (S265). The cloud application utilizer 48a includes the tenant ID and the representative address included in the device registration confirmation result received from the cloud service 31, in the sign-up mail retransmission request.

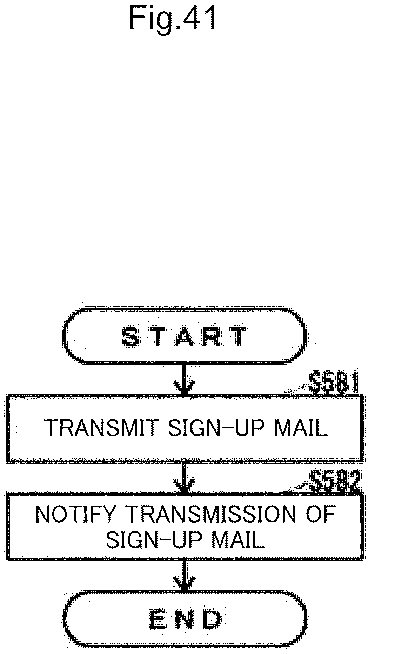

Fig. 41 is a flowchart showing an example of the operation of the cloud service 31, performed upon receipt of the sign-up mail retransmission request.

As shown in Fig. 41, upon receipt of the sign-up mail retransmission request, the tenant management service 31a of the cloud service 31 transmits the sign-up mail, including the link to the sign-up page of the tenant identified with the tenant ID included in the sign-up mail retransmission request, to the representative address included in the sign-up mail retransmission request (S581).

After finishing the operation of S581, the tenant management service 31a notifies the image forming apparatus 40 that the sign-up mail has been transmitted (S582), and finishes the operation specified in Fig. 41.

After finishing the operation of S265, the cloud application utilizer 48a of the image forming apparatus 40 decides whether the transmission of the sign-up mail has been notified from the tenant management service 31a, until deciding that the transmission of the sign-up mail has been notified from the tenant management service 31a (S266), as shown in Fig. 12 to Fig. 18.

Upon deciding at S266 that the transmission of the sign-up mail has been notified from the tenant management service 31a, the cloud application utilizer 48a executes the operation of S181.

Upon identifying at S263 that the reinput button 913 has been pressed at S262, the cloud application utilizer 48a displays the device manager log-in screen 810 (see Fig. 21) in the display device 42 (S267).

After finishing the operation of S267, the cloud application utilizer 48a decides whether any of the buttons in the device manager log-in screen 810 has been pressed, until deciding that one of the buttons in the device manager log-in screen 810 has been pressed (S268).

Upon deciding at S268 that one of the buttons in the device manager log-in screen 810 has been pressed, the cloud application utilizer 48a identifies the button pressed at S268 (S269).

Upon identifying at S269 that the close button 815 has been pressed at S268, the cloud application utilizer 48a erases the display of the device manager log-in screen 810 in the display device 42 (S270), and finishes the operation specified in Fig. 12 to Fig. 18.

Upon identifying at S269 that the cancel button 813 has been pressed at S268, the cloud application utilizer 48a executes the operation of S261.

Upon identifying at S269 that the log-in button 814 has been pressed at S268, the cloud application utilizer 48a performs the authentication of the device user, on the basis of the device user ID inputted to the textbox 811 at the time that the log-in button 814 was pressed, and the password inputted to the textbox 812 at the time that the log-in button 814 was pressed (S271). To be more specific, when the combination of the device user ID inputted to the textbox 811 at the time that the log-in button 814 was pressed, and the password inputted to the textbox 812 at the time that the log-in button 814 was pressed is registered in the device user management information 47c, in association with the role "device manager", the cloud application utilizer 48a decides that the device user has been successfully authenticated. In contrast, when the combination of the device user ID inputted to the textbox 811 at the time that the log-in button 814 was pressed, and the password inputted to the textbox 812 at the time that the log-in button 814 was pressed is not registered in the device user management information 47c, in association with the role "device manager", the cloud application utilizer 48a decides that the authentication of the device user has failed.

After finishing the operation of S271, the cloud application utilizer 48a confirms the result of the authentication performed at S271 (S272).

Upon deciding at S272 that the authentication has failed, the cloud application utilizer 48a executes the operation of S261.

Upon deciding at S272 that the authentication has succeeded, the cloud application utilizer 48a displays the tenant creation setting screen 820 (see Fig. 22) in the display device 42 (S273).

After finishing the operation of S273, the cloud application utilizer 48a decides whether any of the buttons in the tenant creation setting screen 820 has been pressed, until deciding that one of the buttons in the tenant creation setting screen 820 has been pressed (S274).

Upon deciding at S274 that one of the buttons in the tenant creation setting screen 820 has been pressed, the cloud application utilizer 48a identifies the button pressed at S274 (S275).

Upon identifying at S275 that the close button 825 has been pressed at S274, the cloud application utilizer 48a executes the operation of S150.

Upon identifying at S275 that the back button 823 has been pressed at S274, the cloud application utilizer 48a executes the operation of S261.

Upon identifying at S275 that the registration button 824 has been pressed at S274, the cloud application utilizer 48a transmits information for changing the representative address (hereinafter, "representative address change information") to the new registration service 31c, by calling the API thereof (S276). The representative address change information includes the e-mail address inputted to the textbox 821 at the time that the registration button 824 was pressed, the PIN inputted to the textbox 822 at the time that the registration button 824 was pressed, the tenant ID included in the device registration confirmation result received from the cloud service 31, and the device ID of the image forming apparatus 40. When the proxy-use information in the cloud application setting information 47d indicates that the proxy server is used for the communication with outside, the cloud application utilizer 48a uses, when performing the transmission of S276, the IP address or host name of the proxy server, and the port number thereof, specified in the cloud application setting information 47d.

After finishing the operation of S276, the cloud application utilizer 48a confirms whether the connection to the new registration service 31c has been established at S276 (S277).

Upon deciding at S277 that the connection to the new registration service 31c has failed, the cloud application utilizer 48a executes the operation of S161.

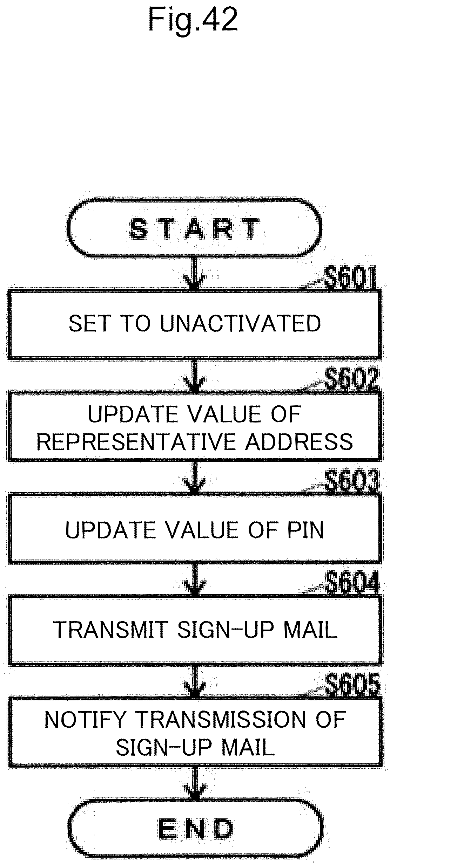

Fig. 42 is a flowchart showing an example of the operation of the new registration service 31c, performed upon receipt of the representative address change information.

Upon receipt of the representative address change information transmitted at S276 from the cloud application utilizer 48a, the new registration service 31c sets the value of the "activation information", associated in the tenant management information 24c with the tenant ID included in the representative address change information, received from the cloud application utilizer 48a, to "unactivated" as shown in Fig. 42 (S601).

After finishing the operation of S601, the new registration service 31c updates the value of the "representative address", associated in the tenant management information 24c with the tenant ID included in the representative address change information received from the cloud application utilizer 48a, to the e-mail address included in the representative address change information received from the cloud application utilizer 48a (S602).

After finishing the operation of S602, the new registration service 31c updates the value of the "PIN", associated in the device management information 24e with the combination of the tenant ID and the device ID included in the representative address change information received from the cloud application utilizer 48a, to the PIN included in the new registration information received from the cloud application utilizer 48a (S603).

After finishing the operation of S603, the new registration service 31c transmits the sign-up mail, including the link to the sign-up page of the tenant, identified with the tenant ID included in the representative address change information received from the cloud application utilizer 48a, to the e-mail address included in the representative address change information received from the cloud application utilizer 48a (S604).

After finishing the operation of S604, the new registration service 31c notifies the image forming apparatus 40 that the sign-up mail has been transmitted (S605), and finishes the operation specified in Fig. 42.

As shown in Fig. 12 to Fig. 18, upon deciding at S277 that the connection to the new registration service 31c has been established at S276, the cloud application utilizer 48a of the image forming apparatus 40 executes the operation of S266.

Upon deciding at S103 that the device registration confirmation result is indicating that the image forming apparatus 40 is registered in the activated tenant, the cloud application utilizer 48a performs the authentication of the device manager, on the basis of the device manager authentication information included in the device registration confirmation result received from the cloud service 31 (S281). To be more specific, when the same authentication information, as the device manager authentication information included in the device registration confirmation result received from the cloud service 31, is included in the device user management information 47c, as the authentication information of the device manager, the cloud application utilizer 48a decides that the authentication of the device manager has succeeded. In contrast, when the same authentication information, as the device manager authentication information included in the device registration confirmation result received from the cloud service 31, is not included in the device user management information 47c, as the authentication information of the device manager, the cloud application utilizer 48a decides that the authentication of the device manager has failed.

After finishing the operation of S281, the cloud application utilizer 48a confirms the result of the authentication of S281 (S282).

Upon deciding at S282 that the authentication of S281 has succeeded, the cloud application utilizer 48a updates the value of the PIN in the cloud application setting information 47d, to the PIN included in the device registration confirmation result received from the cloud service 31 (S283).

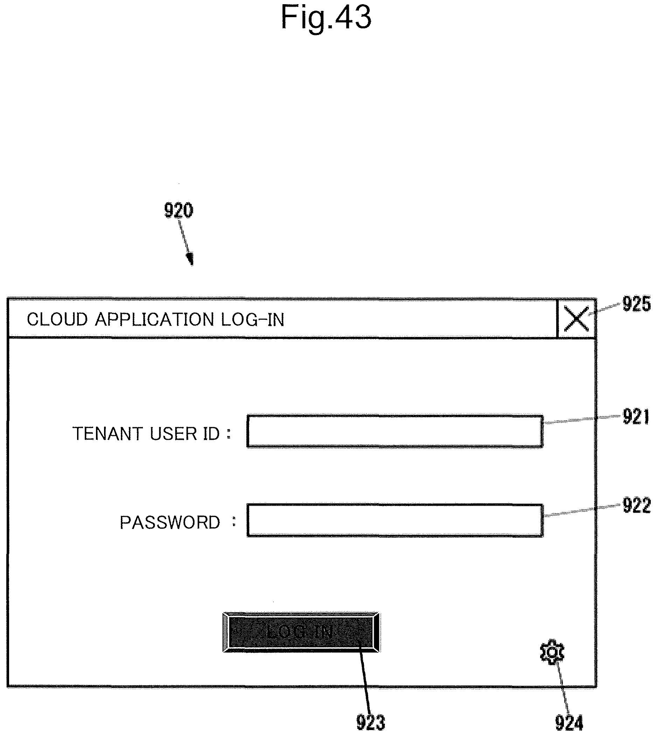

Upon deciding at S282 that the authentication of S281 has failed, or upon executing the operation of S283, the cloud application utilizer 48a displays a screen for logging in to the cloud application 32 (hereinafter, "cloud application log-in screen") 920 (see Fig. 43), in the display device 42 (S284).

Fig. 43 illustrates an example of the cloud application log-in screen 920.

The cloud application log-in screen 920 shown in Fig. 43 includes a textbox 921 serving as a widget for inputting the tenant user ID, a textbox 922 serving as a widget for inputting the password of the tenant user, a log-in button 923 serving as a widget for logging in to the cloud application 32, a set button 924 serving as a widget for specifying various settings of the cloud application utilization program 47a, and a close button 925 for closing the cloud application log-in screen 920.

The log-in button 923 is grayed out and invalid, until the cloud application log-in screen 920 assumes a specific state. The specific state refers to the state where the tenant user ID of a predetermined format is inputted to the textbox 921, and the password of a predetermined format is inputted to the textbox 922. Fig. 43 illustrates the state where the log-in button 923 is grayed out.

As shown in Fig. 12 to Fig. 18, the cloud application utilizer 48a of the image forming apparatus 40 decides whether any of the buttons in the cloud application log-in screen 920 has been pressed, until deciding that one of the buttons in the cloud application log-in screen 920 has been pressed (S285).

Upon deciding at S285 that one of the buttons in the cloud application log-in screen 920 has been pressed, the cloud application utilizer 48a identifies the button pressed at S285 (S286).

Upon identifying at S286 that the close button 925 has been pressed at S285, the cloud application utilizer 48a erases the display of the cloud application log-in screen 920 in the display device 42 (S287), and finishes the operation specified in Fig. 12 to Fig. 18.

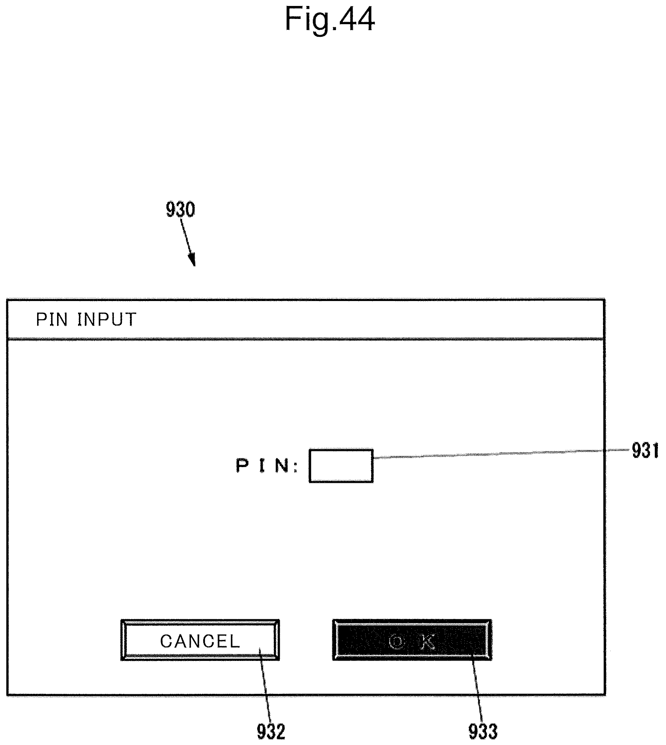

Upon identifying at S286 that the set button 924 has been pressed at S285, the cloud application utilizer 48a displays a screen for inputting the PIN (hereinafter, "PIN input screen") 930 (see Fig. 44), in the display device 42 (S301).

Fig. 44 illustrates an example of the PIN input screen 930.

As shown in Fig. 44, the PIN input screen 930 includes a textbox 931 serving as a widget for inputting the PIN of the device manager, a cancel button 932 serving as a widget for suspending the input of the PIN, and an OK button 933 for confirming the PIN inputted to the textbox 931.

The OK button 933 is grayed out and invalid, until the PIN input screen 930 assumes a specific state. The specific state refers to the state where the PIN of a predetermined format is inputted to the textbox 931. Fig. 44 illustrates the state where the OK button 933 is grayed out.

After finishing the operation of S301, the cloud application utilizer 48a of the image forming apparatus 40 decides whether any of the buttons in the PIN input screen 930 has been pressed, until deciding that one of the buttons in the PIN input screen 930 has been pressed (S302), as shown in Fig. 12 to Fig. 18.

Upon deciding at S302 that one of the buttons in the PIN input screen 930 has been pressed, the cloud application utilizer 48a identifies the button pressed at S302 (S303).

Upon identifying at S303 that the cancel button 932 has been pressed at S302, the cloud application utilizer 48a executes the operation of S284.

Upon identifying at S303 that the OK button 933 has been pressed at S302, the cloud application utilizer 48a decides whether the PIN, inputted to the textbox 931 at the time that the OK button 933 was pressed, is correct (S304). To be more specific, when the value of the PIN inputted to the textbox 931 at the time that the OK button 933 was pressed and the value of the PIN indicated by the cloud application setting information 47d are the same, the cloud application utilizer 48a decides that the PIN inputted to the textbox 931 at the time that the OK button 933 was pressed is correct. In contrast, when the value of the PIN inputted to the textbox 931 at the time that the OK button 933 was pressed and the value of the PIN indicated by the cloud application setting information 47d are not the same, the cloud application utilizer 48a decides that the PIN inputted to the textbox 931 at the time that the OK button 933 was pressed is not correct.

Upon deciding at S304 that the PIN inputted to the textbox 931 at the time that the OK button 933 was pressed is not correct, the cloud application utilizer 48a temporarily displays a screen indicating that the PIN is not correct, in the display device 42 (S305), and executes the operation of S284.

Upon deciding at S304 that the PIN inputted to the textbox 931 at the time that the OK button 933 was pressed is correct, the cloud application utilizer 48a displays a screen for specifying various settings of the cloud application utilization program 47a (hereinafter, "program setting screen"), in the display device 42 (S306). The cloud application utilizer 48a can change the value of various items in the cloud application setting information 47d, in accordance with the inputs to the program setting screen, made through the operation device 41.

After finishing the operation of S306, the cloud application utilizer 48a of the image forming apparatus 40 decides whether an instruction to close the display of the program setting screen in the display device 42 has been received, until deciding that the instruction to close the display of the program setting screen in the display device 42 has been received (S307).

Upon deciding at S307 that the instruction to close the display of the program setting screen in the display device 42 has been received, the cloud application utilizer 48a erases the display of the program setting screen in the display device 42 (S308), and executes the operation of S284.

Upon identifying at S286 that the log-in button 923 has been pressed at S285, the cloud application utilizer 48a transmits a request for logging in of the customer tenant, identified with the tenant ID included in the device registration confirmation result received from the cloud service 31, to the cloud application 32 (hereinafter, "cloud application log-in request"), to the cloud service 31 (S321). The cloud application utilizer 48a includes the tenant ID included in the device registration confirmation result received from the cloud service 31, the tenant ID inputted to the textbox 921 at the time that the log-in button 923 was pressed, and the password inputted to the textbox 922 at the time that the log-in button 923 was pressed, in the cloud application log-in request.

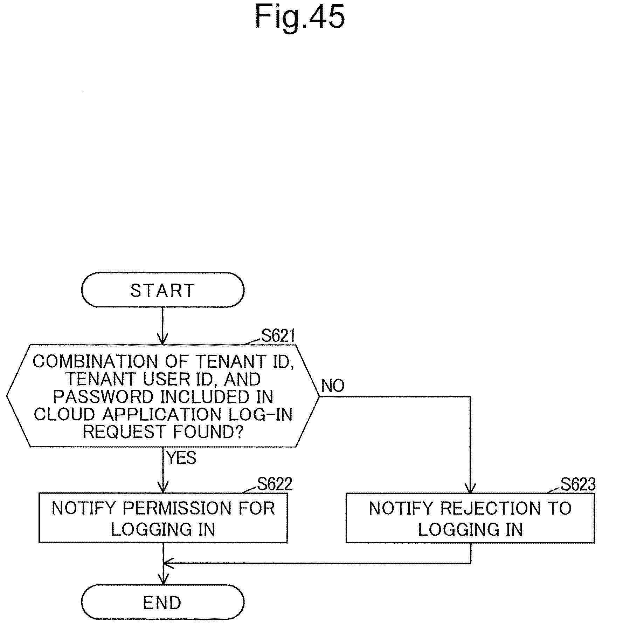

Fig. 45 is a flowchart showing an example of the operation of the cloud service 31, performed upon receipt of the cloud application log-in request.

Upon receipt of the cloud application log-in request (hereinafter "subject cloud application log-in request", in the description of the operation specified in Fig. 45), the cloud service 31 executes the operation specified in Fig. 45.

As shown in Fig. 45, the cloud service 31 decides whether the tenant user management information 24d includes a record including the combination of the tenant ID, the tenant user ID, and the password included in the subject cloud application log-in request (S621).

Upon deciding at S621 that the tenant user management information 24d includes the record including the combination of the tenant ID, the tenant user ID, and the password included in the subject cloud application log-in request, the cloud service 31 notifies the image forming apparatus 40 that log-in to the cloud application 32 has been permitted (S622), and finishes the operation specified in Fig. 45.

Upon deciding at S621 that the tenant user management information 24d does not include the record including the combination of the tenant ID, the tenant user ID, and the password included in the subject cloud application log-in request, the cloud service 31 notifies the image forming apparatus 40 that log-in to the cloud application 32 has been rejected (S623), and finishes the operation specified in Fig. 45.

After finishing the operation of S321, the cloud application utilizer 48a of the image forming apparatus 40 decides whether the notice of permission or rejection to log-in has been received from the cloud service 31, until deciding that the notice of permission or rejection to log-in has been received from the cloud service 31 (S322), as shown in Fig. 12 to Fig. 18.

Upon deciding at S322 that the notice of permission or rejection to log-in has been received from the cloud service 31, the cloud application utilizer 48a confirms the content of the notice received from the cloud service 31 (S323).

Upon deciding at S323 that the notice received from the cloud service 31 is indicating rejection to log-in, the cloud application utilizer 48a temporarily displays a screen indicating that log-in has failed in the display device 42 (S324), and finishes the operation specified in Fig. 12 to Fig. 18.

Upon deciding at S323 that the notice received from the cloud service 31 is indicating permission for log-in, the cloud application utilizer 48a starts the operation in linkage with the cloud application 32 (S325).

After finishing the operation of S325, the cloud application utilizer 48a decides whether an instruction to log out from the cloud application 32 has been received through the operation device 41, until deciding that the instruction to log out from the cloud application 32 has been received through the operation device 41 (S326).

Upon deciding at S326 that the instruction to log out from the cloud application 32 has been received through the operation device 41, the cloud application utilizer 48a logs out from the cloud application 32 (S327), and finishes the operation specified in Fig. 12 to Fig. 18.

As described thus far, upon receipt of the new registration information transmitted at S151 from the image forming apparatus 40, the cloud application provision system 20 creates the customer tenant in which the image forming apparatus 40 is to be registered (S426), and registers the image forming apparatus 40 in the created customer tenant (S427). Therefore, the creation of the customer tenant can be more facilitated than ever.

Since the cloud application provision system 20 facilitates the creation of the customer tenant, the utilization of the cloud application by the image forming apparatus 40 can be promptly started. Therefore, the cloud application provision system 20 increases the possibility that the user of the image forming apparatus 40 utilizes the cloud application.

The cloud application provision system 20 registers the image forming apparatus 40 in the customer tenant, created upon receipt of the new registration information transmitted from the image forming apparatus 40. Therefore, the image forming apparatus 40 can be prevented from being registered in a wrong customer tenant.

When there is a customer tenant managed in association with the e-mail address included in the new registration information (YES at S424), the cloud application provision system 20 does not create the customer tenant, in which the image forming apparatus 40 that is the transmission source of the new registration information is to be registered. Therefore, creation of an unnecessary customer tenant can be prevented.

Upon creating the customer tenant, in which the image forming apparatus 40 that is the transmission source of the new registration information is registered, the cloud application provision system 20 transmits the e-mail for the registration of the created customer tenant, to the e-mail address included in the new registration information (S428), which leads to improved convenience in use.

In the case where the number of customer tenants immediately under a first distributor tenant exceeds a predetermined number, when the customer tenant, in which the image forming apparatus 40 that is the transmission source of the new registration information is registered, is to be created immediately under the first distributor tenant (NO at S441), the cloud application provision system 20 creates the customer tenant, in which the image forming apparatus 40 that is the transmission source of the new registration information is registered, immediately under a second distributor tenant, immediately under which the number of customer tenants is equal to or fewer than the predetermined number (S443, S444, and S462). Therefore, excessive concentration of load on the first distributor tenant can be prevented. Here, although the customer tenant immediately under the distributor tenant is referred to above, the mentioned arrangement may be applied to the customer tenant on the lower side of the distributor tenant. In other words, in the case where the number of customer tenants on the lower side of the first distributor tenant exceeds a predetermined number, when the customer tenant, in which the image forming apparatus 40 that is the transmission source of the new registration information is registered, is to be created on the lower side of the first distributor tenant, the cloud application provision system 20 may create the customer tenant in which the image forming apparatus 40 that is the transmission source of the new registration information is registered, on the lower side of the second distributor tenant, on the lower side of which the number of customer tenants is equal to or fewer than the predetermined number.

The cloud application provision system 20 can facilitate the management of the customer tenant, in the case of creating the customer tenant in which the image forming apparatus 40 that is the transmission source of the new registration information is registered, immediately under the distributor tenant identified on the basis of the new registration information. Here, although the customer tenant immediately under the distributor tenant is referred to above, the mentioned arrangement may be applied to the customer tenant on the lower side of the distributor tenant. In other words, the cloud application provision system 20 may create the customer tenant in which the image forming apparatus 40 that is the transmission source of the new registration information is registered, on the lower side of the distributor tenant identified on the basis of the new registration information.

The cloud application provision system 20 manages the number of licenses of the cloud application with respect to each of the customer tenant, and does not newly register the image forming apparatus 40 that does not possess the license, in the customer tenant the number of licenses of which, managed by the cloud application provision system 20, has been reached by a number obtained by subtracting the number of image forming apparatuses 40 possessing the license, from the number of image forming apparatuses 40 registered in the customer tenant (NO at S564). Therefore, the image forming apparatuses 40 of the number that accords with the number of licenses can be registered.

When the authentication of the device manager of the image forming apparatus 40, based on the information inputted to the device manager log-in screen 810, to which the information for authentication of the device manger is inputted, has succeeded, the image forming apparatus 40 transmits the new registration information to the cloud application provision system 20 (S151). Therefore, the image forming apparatus 40 can be prevented from being erroneously registered in the cloud application provision system 20.

In the management system 10, when there is a customer tenant managed by the cloud application provision system 20, in association with the e-mail address included in the new registration information, the cloud application provision system 20 transmits the tenant information notice indicating that the customer tenant exists that is managed by the cloud application provision system 20, in association with the e-mail address included in the new registration information, to the image forming apparatus 40 that is the transmission source of the new registration information (S432); the image forming apparatus 40 accepts the designation of the customer tenant by the user, upon receipt of the tenant information notice (S225); the image forming apparatus 40 transmits the device registration request, for registering itself in the customer tenant designated by the user, to the cloud application provision system 20 (S232); and upon receipt of the device registration request, the cloud application provision system 20 registers the image forming apparatus 40 in the customer tenant, in accordance with the device registration request (S543 to S544). Therefore, the convenience in use can be improved.

In the management system 10, when there is a customer tenant managed by the cloud application provision system 20, in association with the e-mail address included in the new registration information, the cloud application provision system 20 transmits the tenant information notice indicating that the customer tenant exists that is managed by the cloud application provision system 20, in association with the e-mail address included in the new registration information, to the image forming apparatus 40 that is the transmission source of the new registration information (S431); upon receipt of the tenant information notice, the image forming apparatus 40 transmits the device registration request, for registering itself in the customer tenant managed by the cloud application provision system 20 in association with the e-mail address included in the new registration information, to the cloud application provision system 20 (S209); and upon receipt of the device registration request, the cloud application provision system 20 registers the image forming apparatus 40 in the customer tenant, in accordance with the device registration request (S543 to S544). Therefore, the convenience in use can be improved.

The "information of the specific type" according to the invention is exemplified by the "e-mail address", in the foregoing embodiment. However, the "information of the specific type" according to the invention may be information other than the "e-mail address".

The "electronic device" according to the invention is exemplified by the "image forming apparatus" in the embodiment. However, the "electronic device" according to the invention may be an electronic device other than the "image forming apparatus".

In the case of existing cloud application provision systems, not configured according to the foregoing embodiment, the tenant is unable to be created on the basis of the electronic device utilized by the user, and therefore the process of creating the tenant is complicated and troublesome. In contrast, the arrangement according to the embodiment significantly facilitates the creation of the tenant, compared with the existing system.

## Claims

1. A cloud application provision system (20) that provides a cloud application (32) to be utilized by an electronic device (40), the cloud application provision system (20) being configured to:
manage a tenant to which the electronic device (40) belongs, and the electronic device (40) belonging to the tenant; and
create, upon receipt of specific information transmitted from the electronic device (40), the tenant in which the electronic device (40) that is a transmission source of the specific information is to be registered, and registers the electronic device (40) that is the transmission source of the specific information, in the tenant created.

2. The cloud application provision system (20) according to claim 1,
wherein the tenant is managed in association with information of a specific type,
the specific information includes the information of the specific type, and
when the tenant exists that is managed in association with the information of the specific type included in the specific information, the cloud application provision system (20) keeps from creating the tenant, in which the electronic device (40) that is the transmission source of the specific information is to be registered.

3. The cloud application provision system (20) according to claim 2,
wherein the information of the specific type includes an e-mail address, and
the cloud application provision system (20) transmits, upon creating the tenant in which the electronic device (40) that is the transmission source of the specific information is to be registered, an e-mail for registering a manager of the tenant to the e-mail address included in the specific information.

4. The cloud application provision system (20) according to claim 1,
wherein, in a case where a number of the tenants under a first tenant exceeds a predetermined number, when the tenant in which the electronic device (40) that is the transmission source of the specific information is to be registered is created under the first tenant, the tenant in which the electronic device (40) that is the transmission source of the specific information is to be registered is created under a second tenant, under which the number of the tenants is equal to or fewer than the specific number.

5. The cloud application provision system (20) according to claim 1,
wherein the tenant in which the electronic device (40) that is the transmission source of the specific information is to be registered is created, under the tenant identified on a basis of the specific information.

6. The cloud application provision system (20) according to claim 1,
wherein a number of licenses of the cloud application (32) is managed with respect to each of the tenants, and
the cloud application provision system (20) keeps from newly registering the electronic device (40) in the tenant, the number of licenses of which, managed by the cloud application provision system (20), has been reached by a number of the electronic device (40)s registered in the tenant.

7. The cloud application provision system (20) according to claim 1,
wherein a number of licenses of the cloud application (32) is managed with respect to each of the tenants, and
the cloud application provision system (20) keeps from newly registering the electronic device (40), which itself does not possess the license, in the tenant the number of licenses of which, managed by the cloud application provision system (20), has been reached by a number obtained by subtracting a number of the electronic device (40)s possessing the license, from a number of the electronic device (40)s registered in the tenant.

8. The cloud application provision system (20) according to claim 1,
wherein the cloud application provision system (20) registers the electronic device (40) that is the transmission source in the tenant, provided that a user of the tenant has been approved to log in.

9. A cloud application provision device (20) that provides a cloud application (32) to be utilized by an electronic device (40), the cloud application provision device (20) being configured to:
manage a tenant to which the electronic device (40) belongs, and the electronic device (40) belonging to the tenant; and
create, upon receipt of specific information transmitted from the electronic device (40), the tenant in which the electronic device (40) that is a transmission source of the specific information is to be registered, and registers the electronic device (40) that is the transmission source of the specific information, in the tenant created.

10. A cloud service program (24a) that provides a cloud application (32) to be utilized by an electronic device (40), and causes a computer to execute a process for managing a tenant to which the electronic device (40) belongs, and the electronic device (40) belonging to the tenant,
the cloud service program (24a) being configured to cause the computer to create, upon receipt of specific information transmitted from the electronic device (40), the tenant in which the electronic device (40) that is a transmission source of the specific information is to be registered, and register the electronic device (40) that is the transmission source of the specific information, in the tenant created.

11. An electronic device (40) that utilizes a cloud application (32) provided by a cloud application provision system (20) that provides the cloud application (32),
the electronic device (40) being configured to transmit specific information to the cloud application provision system (20) that creates, upon receipt of the specific information transmitted from the electronic device (40), a tenant in which the electronic device (40) that is a transmission source of the specific information is to be registered, and registers the electronic device (40) that is the transmission source of the specific information, in the tenant created.

12. The electronic device (40) according to claim 11, being configured to:
display a screen to which information for authentication of a manager of the electronic device (40) is to be inputted; and
transmit the specific information to the cloud application provision system (20), when the authentication of the manager based on the information inputted to the screen has succeeded.

13. A cloud application (32) utilization program that causes a computer to execute a process for allowing an electronic device (40) to utilize a cloud application (32) provided by a cloud application provision system (20) that provides the cloud application (32),
the cloud application (32) utilization program being configured to causes the computer provided in the cloud application provision system (20), to:
cause the electronic device (40) to transmit specific information to the cloud application provision system (20);
create, upon receipt of the specific information transmitted from the electronic device (40), the tenant in which the electronic device (40) that is a transmission source of the specific information is to be registered; and
register the electronic device (40) that is the transmission source of the specific information, in the tenant created.

14. A management system (10) comprising:
an electronic device (40); and
the cloud application provision system (20) according to claim 1.

15. The management system (10) according to claim 14,
wherein the cloud application provision system (20) manages the tenant in association with information of a specific type,
the specific information includes the information of the specific type,
when the tenant exists that is managed in association with the information of the specific type included in the specific information, the cloud application provision system (20) keeps from creating the tenant, in which the electronic device (40) that is the transmission source of the specific information is to be registered,
when the tenant exists that is managed in association with the information of the specific type included in the specific information, the cloud application provision system (20) transmits a notice indicating that the tenant exists that is managed in association with the information of the specific type included in the specific information, to the electronic device (40) that is the transmission source of the specific information,
upon receipt of the notice, the electronic device (40) accepts designation of the tenant by the user, and transmits a request for registering the electronic device (40) itself in the tenant designated by the user, to the cloud application provision system (20), and
upon receipt of the request, the cloud application provision system (20) registers the electronic device (40) in the tenant, in accordance with the request.

16. The management system (10) according to claim 14,
wherein the cloud application provision system (20) manages the tenant in association with information of a specific type,
the specific information includes the information of the specific type,
when the tenant exists that is managed in association with the information of the specific type included in the specific information, the cloud application provision system (20) keeps from creating the tenant, in which the electronic device (40) that is the transmission source of the specific information is to be registered,
when the tenant exists that is managed in association with the information of the specific type included in the specific information, the cloud application provision system (20) transmits a notice indicating that the tenant exists that is managed in association with the information of the specific type included in the specific information, to the electronic device (40) that is the transmission source of the specific information,
upon receipt of the notice, the electronic device (40) transmits a request for registering the electronic device (40) itself in the tenant managed by the cloud application provision system (20) in association with the information of the specific type included in the specific information, to the cloud application provision system (20), and
upon receipt of the request, the cloud application provision system (20) registers the electronic device (40) in the tenant, in accordance with the request.
